# FASCICULE DE BREVET EUROPEEN

(11) **EP 1 404 441 B1**
(45) Date de publication et mention de la délivrance du brevet: **05.11.2008**
(21) Numéro de dépôt: 02762541.7
(22) Date de dépôt: 10.07.2002
(51) Int. Cl.: B01J 19/00

(54) **PROCEDE ET MACHINE DE FABRICATION EX SITU DE RESEAUX DE BIOPUCES BASSE ET MOYENNE INTEGRATION**
VERFAHREN UND VORRICHTUNG ZUR EX-SITU HERSTELLUNG VON BIOCHIPS MIT NIEDRIGER UND MITTLERER DICHTHEIT
METHOD AND MACHINE FOR EX SITU PRODUCTION OF LOW AND MEDIUM INTEGRATION BIOCHIP NETWORKS

(30) Priorité: 10.07.2001 FR 0109179
(43) Date de publication de la demande: 07.04.2004
(60) Demande divisionnaire: 06077197.9
(73) Titulaire: Centre National de la Recherche Scientifique, 75794 Paris Cedex 16 (FR); Ecole Centrale de Lyon, 69131 Ecully Cedex (FR)
(72) Inventeur: CABRERA, Michel, F-69008 Lyon (FR); JABER, Mehdi, F-69100 Villeurbanne (FR); CLOAREC, Jean-Pierre, F-69001 Lyon (FR); BROUTIN, Jérome, F-69007 Lyon (FR); SOUTEYRAND, Eliane, F-41120 Cellettes (FR); MARTIN, Jean-René, F-69380 Lozanne (FR)
(74) Mandataire: Bolinches, Michel Jean-Marie
(86) Numéro de dépôt international: PCT/FR2002/002427
(87) Numéro de publication internationale: WO 2003/006153

(56) Documents cités:
- WO-A-00/51736
- WO-A-01/19432
- US-A- 5 658 802
- US-A- 6 083 763
- US-A- 6 103 467
- US-B1- 6 203 759
- ANTHONY V. LEMMO ET AL.: "CHARACTERIZATION OF AN INKJET CHEMICAL MICRODISPENSER FOR COMBINATORIAL LIBRARY SYNTHESIS" ANALYTICAL CHEMISTRY, vol. 69, no. 4, 15 février 1997 (1997-02-15), pages 543-551, XP000681609 COLUMBUS, OHIO, US ISSN: 0003-2700

## Description

L'invention concerne un procédé et une machine de fabrication *ex situ* de réseaux de biopuces de basse et moyenne intégration.

Dans le domaine des biotechnologies, les biopuces, notamment les puces à ADN, sont présentées comme des outils totalement innovants pouvant révolutionner les approches expérimentales de la biologie moléculaire. L'intérêt d'une biopuce réside dans la possibilité de procéder à l'identification de biomolécules cibles, de manière parallèle, avec plusieurs dizaines à plusieurs millions de sondes de compositions différentes sur la même structure solide (verre, silicium, polymère, etc.), en mettant en oeuvre un processus de reconnaissance affine entre la sonde et la puce.

A titre d'exemple, une puce à ADN est un dispositif conçu pour permettre l'identification de brins d'ADN monocaténaires en faisant appel au processus d'hybridation réalisé entre le ou les brins d'ADN cible à reconnaître et l'un des oligonucléotides sondes de séquence connue, fixé en une zone définie sur un support solide, par identification de la zone hybridée et donc de la séquence de l'oligonucléotide supporté, il est possible de déterminer la séquence du brin d'ADN cible.

Selon le degré d'intégration des biopuces, il est possible de distinguer:
- les puces basse intégration qui comportent jusqu'à quelques centaines de sondes,
- les puces moyenne intégration qui présentent plusieurs centaines à plusieurs milliers de sonde, et
- les puces haute intégration qui ont un nombre de sondes supérieur à dix mille,
sachant que ces différents types de puces n'ont pas la même utilisation.

Les biopuces basse intégration verront leur principale application dans le domaine du diagnostic. Elles sont donc destinées à une production de masse à un coût relativement faible. Leur utilisation doit aboutir à un résultat simple rapidement interprétable. Leur fabrication utilise avantageusement l'immobilisation directe de sondes obtenues à partir d'extraits naturels ou présynthétisés, préalablement contrôlées et purifiées. Cette technique garantie la pureté des sondes et donc une meilleure fiabilité des puces élaborées.

Les biopuces moyenne intégration sont le plus souvent utilisées pour des études très précises, souvent pour mettre au point des puces basse intégration, par exemple dans le cas de puces ADN pour étudier la mutation d'un gène ou le transcryptome. Elles devront donc être produites en quantité plus limitée que les puces basse intégration et nécessitent pour leur production un outillage très adaptatif. Pour les biopuces de "petite" moyenne intégration l'immobilisation directe pourra être mise en oeuvre, alors que les biopuces de "forte" moyenne intégration il sera fait appel à la synthèse in situ, directement sur le support de la puce.

Les biopuces haute intégration sont utilisées pour des études très complexes et lourdes. L'élaboration de ces puces ne peut être envisagée qu'en terme de synthèse *in situ.* La quantité d'informations obtenue sur une puce, liée au grand nombre de sondes et donc de solutions possibles, nécessite pour pouvoir être interprétée de manière fiable, un grand nombre d'opérations expérimentales de validation des processus de reconnaissance affine, par exemple d'hybridation/dénaturation dans le cas de l'ADN, ainsi que des traitements mathématiques importants. Ce développement très long entraîne des frais élevés, ce qui limite les applications à des études à haute valeur ajoutée, par exemple l'étude des effets secondaires des médicaments.

De nombreuses méthodes de fabrication de biopuces sont connues, et on peut les classer en deux catégories, à savoir les méthodes de fabrication *in situ* qui consistent à synthétiser simultanément les sondes base par base sur un substrat, et les méthodes de fabrication *ex situ* qui sont basées sur la production du jeu de sondes suivie par la fixation de ces sondes sur un substrat.

L'invention entre dans les méthodes de fabrication *ex situ* où la fabrication des sondes reposent sur des méthodes connues en soi. Les méthodes de fabrication ex situ peuvent être classées selon le procédé de mise en contact de la sonde avec le substrat : soit la solution contenant la sonde est mise en contact avec la totalité de la surface du substrat, la fixation est alors réalisée sur une zone adressée sélectivement, par exemple par électropolymérisation, soit le dépôt des sondes se fait localement par contact physique du moyen de dépôt sur le substrat, soit il se fait par microprojection sans contact physique avec le substrat. Les méthodes de fabrication ex situ peuvent être aussi classées selon le procédé de liaison des sondes sur le substrat. Les différents modes de liaison possible sont basés sur l'adsorption de la sonde sur le substrat, soit sur une liaison par affinité biologique, par exemple du type biotine/streptavidine, soit sur une liaison par électropolymérisation, soit enfin avantageusement par formation d'une liaison chimique covalente. Le procédé selon l'invention est compatible avec l'ensemble de ces méthodes de fixation.

Selon les méthodes connues de fabrication *ex situ* avec une liaison des sondes sur le substrat par microprojection, on utilise des dispositifs de type piézo-électrique ou à effet thermique, ces deux techniques ayant été développées pour les imprimantes à jet d'encre.

Les dispositifs de microprojection de type piézo-électrique sont des dispositifs comprenant un réservoir de sondes dont l'alimentation est effectuée par capillarité et/ou sous l'effet d'une très faible différence de pression positive ou négative vis-à-vis de l'extérieur, c'est-à-dire de l'ordre du millibar. Ce réservoir présente toujours un orifice ouvert, il en résulte des problèmes de conservation des sondes par suite d'une évaporation possible et du contact avec l'atmosphère. Par ailleurs, une microprojection par ce type de dispositifs est limitée à un volume maximum de l'ordre de 4 à 30 picolitres pour un réservoir d'un volume de l'ordre du millilitre, ce qui ne facilite pas les opérations de décontamination par un remplacement aisé de la solution contenant les sondes par du liquide de nettoyage, et les opérations de vidange compte-tenu du faible débit possible. Enfin, les dispositifs de microprojection de type piézo-électrique nécessitent des dispositifs de commande complexes et difficiles à mettre au point.

L'article paru dans la revue "ANALYTICAL CHEMISTRY" intitulé "Characterization of an inkjet chemical microdispenser for combinatorial library synthesis", volume 69, n°4, du 15 février 1997, décrit un procédé et une machine permettant de tester l'efficacité de différents type de microélectrovannes et d'orifices de projection.

Selon cet article, une batterie de dispositifs de microprojection indépendants est utilisée pour projeter des microgouttes de réactifs suivant un mode séquentiel d'un volume de l'ordre de 8 µL à 70 nL sur des substrats plans pour obtenir des plots d'un diamètre de l'ordre de 3,5 mm avec un écart entre plots de l'ordre de 4,5 mm. Un tel procédé et une telle machine ne permettent pas une résolution importante et suffisante pour la production de biopuces en masse.

Un but de l'invention est de concevoir une autre technique ex situ de projection de gouttes de réactif sur un substrat, cette nouvelle technique étant par ailleurs bien adaptée pour la fabrication de biopuces de quelques centaines à quelques milliers de sondes, avec une vitesse de fabrication élevée et un coût de fabrication de quelques cents d'Euro à quelques Euros par puce, et de pourvoir ainsi aux besoins de l'industrie pour ce qui concerne la production en série de puces basse et petite moyenne intégration.

A cet effet, l'invention propose un procédé pour la fabrication ex situ de biopuces, du type consistant à projeter sous pression sur au moins un substrat porté par un plateau mobile un microvolume d'un réactif contenant au moins une sonde diluée dans un solvant approprié pour former, après élimination du solvant, au moins un plot comprenant ladite sonde accrochée au substrat, consistant à utiliser une batterie de dispositifs de microprojection indépendants pour projeter des microgouttes de réactifs suivant un mode séquentiel d'un volume de l'ordre de 10 nl sur des substrats plans d'un nombre de l'ordre de 1 à 10 000 pour obtenir des plots d'un diamètre de l'ordre de 100 à 1 000 µm avec un écart entre plots de l'ordre de 50 à 500 µm, caractérisé en ce qu'il consiste, avant la fabrication des puces, à effectuer une opération de calibration pour obtenir un réseau régulier de plots sur le substrat, cette opération consistant :
- à projeter des plots sur un substrat intermédiaire transparent,
- à repérer la position des plots formés sur le substrat au moyen d'un système de visualisation,
- à enregistrer en mémoire les écarts entre les positions repérées et les positions souhaitées des plots,
puis, lors de la fabrication des puces,
- à corriger automatiquement, le déplacement relatif entre le plateau et la batterie de dispositifs de microprojection pour compenser lesdits écarts et obtenir un réseau régulier de plots.

A cet effet, le procédé consiste à compléter le dispositif de microprojection avec un actionneur interposé entre le réservoir et la buse d'éjection, et à commander l'actionneur dans un état dit ouvert pendant un temps déterminé pour mettre en communication directe le réservoir et la buse d'éjection, de manière à projeter le microvolume de réactif sous l'action de la pression du gaz présent dans le réservoir.

D'une manière générale, le procédé consiste à maintenir en permanence sous pression le réactif stocké dans le réservoir, et à commander l'actionneur dans un état dit fermé pour isoler le réservoir sous pression dans l'attente de l'éjection d'un microvolume de réactif, ce qui permet d'éviter l'évaporation du réactif et de le conserver en milieu inerte.

Avantageusement, le procédé consiste à utiliser une batterie de dispositifs de microprojection indépendants pour former plusieurs plots sur au moins un substrat, et à configurer la batterie de dispositifs de microprojection suivant une matrice à plusieurs lignes, à réaliser chaque ligne de la matrice sous une forme modulaire, et à mettre en communication tous les réservoirs d'une ligne de dispositifs de microprojection avec une même source de gaz sous pression.

Par ailleurs, avec un nombre important de dispositifs de microprojection, il est ainsi possible de former, en une seule passe, une pluralité de plots sur au moins un substrat, chaque réservoir des dispositifs de microprojection ne contenant qu'un seul type de sonde.

En pratique, le procédé consiste à disposer les buses d'éjection à une distance du substrat de l'ordre de 0,1 mm à 10 mm, de préférence de l'ordre du millimètre, et à projeter un microvolume de réactif sous la forme d'une microgoutte d'un volume de l'ordre de quelques nano litres.

L'invention a également pour objet une machine pour la mise en oeuvre du procédé tel que défini précédemment, cette machine comprenant :
- au moins un dispositif de microprojection (D) sur au moins un substrat (18) d'un microvolume de réactif contenant au moins une sonde diluée dans un solvant approprié pour former, après élimination du solvant, au moins un plot (20) comprenant ladite sonde accrochée au substrat (18),
- une batterie de dispositifs de microprojection indépendants (D) pour fabriquer une pluralité de biopuces, en particulier sur des substrats plans,
- au moins une source (5) de gaz sous pression,
- un plateau de support (25) d'au moins un substrat (18), et des moyens pour assurer un déplacement relatif entre le plateau (25) et la batterie de dispositifs de microprojection (D),
et caractérisée en ce qu'elle comprend également un système de visualisation (70) de contrôle de la projection des plots (20) sur le substrat (18), une mémoire d'enregistrement des écarts entre les positions repérées et les positions souhaitées des plots (20), et un moyen de correction automatique du déplacement relatif entre le plateau (25) et la batterie de dispositifs de microprojection (D) pour compenser lesdits écarts et obtenir un réseau régulier de plots (20).

Avantageusement, l'actionneur de chaque dispositif de microprojection est constitué par une électrovanne.

Selon un mode de réalisation avantageux, la machine comprend une batterie de dispositifs de microprojection indépendants les uns des autres, et la batterie de dispositifs de microprojection est configurée suivant une matrice à plusieurs lignes.

Avantageusement, chaque ligne de la batterie de dispositifs de microprojection forme un module dont l'ossature peut comprendre au moins :
- un premier bloc-support sous la forme d'un barreau pour supporter l'ensemble des réservoirs du module et assurer les connexions fluidiques nécessaires pour mettre sous pression le réactif stocké dans les réservoirs, et
- un second bloc-support pour supporter les actionneurs et les buses d'éjection des dispositifs de microprojection du module.

Selon un mode de réalisation, le premier bloc-support est percé de part en part par un canal longitudinal principal dont une extrémité est reliée à une source de gaz sous pression, et est également percé d'un ensemble de canaux transversaux secondaires qui débouchent dans le canal principal et dans l'ensemble des réservoirs à raison d'un canal secondaire par réservoir, de manière, à n'utiliser qu'une source de gaz sous pression pour l'ensemble des réservoirs du module afin de réduire le nombre de connexions.

Par ailleurs, le premier bloc-support est également percé de part en part d'orifices transversaux au travers desquels passent des tubes de sortie reliant les réservoirs et les actionneurs, et ces orifices peuvent être disposés en quinconce pour réduire la taille du module.

Avantageusement, chaque tube de sortie est formé de deux tronçons qui se raccordent au niveau d'un orifice transversal du premier bloc-support au moyen d'un raccord rapide.

Avantageusement, l'ossature de chaque module est montée de façon amovible sur le bâti de la machine pour faciliter les opérations de montage et de démontage du module.

Selon un mode de réalisation, la batterie de dispositifs de microprojection est fixe, et le plateau est mobile et commandé par un dispositif à mouvements croisés en XY au moyens de deux moteurs.
Le procédé et la machine de fabrication ex situ selon l'invention permettent une fabrication de masse, ce qui n'était pas envisageable jusqu'à maintenant. En effet, dans les machines de mise en oeuvre des procédés par microdéposition mécanique souvent désignés dans la littérature anglo-saxonne par les termes"spotter"ou"arrayer", on arrive à réaliser une matrice de pipettes de l'ordre de 4 à 32 éléments, alors que le nombre de puits est généralement de 128, voir 384. Il est donc impossible de déposer l'ensemble des sondes en une seule passe, et après chaque passe il faut en plus décontaminer et rincer les pipettes. De mme, dans les machines de mise en oeuvre des procédés par microprojection de type piézo-électrique ou à effet thermique, il est difficile d'envisager une fabrication au-delà de quelques moyens de microprojection, ce qui implique des opérations de nettoyage et de vidange fréquentes.

La mise en oeuvre d'une pression positive pour assurer la microprojection du réactif permet de concevoir une machine dont le fonctionnement est stable. En effet, l'épuisement des réactifs stockés dans les réservoirs n'a que peu d'influence sur le débit des dispositifs de microprojection, l'étanchéité de ces derniers empêche l'évaporation du solvant, c'est-à-dire que la concentration des sondes ne varie pas, et il est possible de réutiliser des sondes non utilisées et conservées dans leurs réservoirs respectifs sans perte de qualité, car il n'y a pas de contact avec un gaz ou un réactif susceptible d'altérer les propriétés des sondes qui sont conservées durant leur utilisation en milieu inerte. Par ailleurs, en ajustant la pression du gaz, il est possible de travailler avec des sondes de viscosité importante ou différente, ce qui est particulièrement avantageux par exemple pour les sondes ADNc.

Le procédé et la machine de fabrication selon l'invention présentent également de nombreux avantages pour une production de masse, en particulier:
- une faible consommation de réactifs étant donné que le dispositif de microprojection constitué d'une microélectrovanne à buse intégrée, le volume d'une goutte projetée est typiquement de 10 nanolitres, alors que le volume "utile", c'est-à-dire projetable de sonde dans le réservoir est de l'ordre de 1 millilitre, si bien qu'il est possible de projeter de l'ordre de 100 000 gouttes et de fabriquer de l'ordre de 100 000 puces dans un processus de fabrication continu en grande série ;
- un faible coût de fabrication des puces par la faible quantité de matériel biologique collectif des puces, et à titre d'exemple le coût d'un réservoir de sondes oligonucléotidiques de 25 nucléotides est d'environ 30,00 €, ce qui rapporté à un volume de fabrication de 100 000 puces conduit à 0,03 cents d'Euro par plot et par puce, et il en résulte que dans le coût de fabrication d'une puce de 256 sondes, la part des sondes dans le coût de fabrication est donc inférieur à 0,15 €;
- une mise en oeuvre simple,
- un procédé de microprojection qui est compatible avec un grand nombre de solvants, purs ou en mélange, de propriétés physicochimiques variées (tension de surface, viscosité, vitesse d'évaporation), comme par exemple l'acétonitrile, le Dimethyl-formamide (DMF), le Dimethyl-sulfoxyde (DMSO), l'eau et des solutions aqueuses telle que le TRIS, le Tampon phosphate (PBS), ce dernier solvant étant particulièrement intéressant pour les raisons suivantes : innocuité ; bonne solubilisation des biomolécules, ce qui permet d'obtenir des spots homogènes ; tension de surface adaptée aux substrats activés, ce qui permet d'obtenir une taille réduite des spots ; élimination contrôlée du solvant, par exemple, pour un plot de 250 µm constitué par une projection de 10 nanolitres de sonde dans du PBS (60 secondes à 21 °C et 15 secondes à 40°C) ; et
- une production flexible, étant donné que l'on peut par exemple fabriquer en grande série une puce avec 1024 sondes en disposant 4 dispositifs à 256 moyens de projection, sachant que pour des petites séries à l'échelle du laboratoire, il est possible de fractionner la production et d'obtenir les 1024 sondes avec la machine à 256 réservoirs en procédant à 4 changements de réservoirs, avec une opération intermédiaire de lavage, et en décalant les séries de microprojections sur les substrats.

D'une manière générale, l'utilisation des biopuces ouvrent d'immenses perspectives dans des domaines extrêmement variés, comme par exemple:
- la recherche fondamentale : séquençage génomique, étude de l'expression et de la fonctionnalité des gènes, recherches de mutations, étude de la biodiversité des espèces (animale, végétale, bactérienne),
- le secteur médical : mise au point de test diagnostic des maladives infectieuse et génétique, aide au suivi des essais cliniques, adaptation de la thérapie,
- la pharmaco-génomique : toxicité des traitements et identification des effets secondaires, résistance aux antiviraux, recherche de nouvelles molécules,
- environnement : contrôle de la pollution à travers l'analyse bactérienne de l'eau, de l'air et du sol,
- l'agroalimentaire : suivi bactériologique, identification d'OGM, etc.

D'une manière générale, l'accrochage des sondes peut être réalisé par l'intermédiaire d'une couche de molécules de liaison comportant à une extrémité une fonction destinée à leur fixation sur le substrat et à l'autre extrémité une fonction, éventuellement protégée, qui permet d'éviter une réaction sur le support. Cette fonction permet par la suite de fixer, après déprotection et activation, une sonde par liaison covalente.

Le procédé de fabrication peut être basé sur un accrochage covalent des sondes sur le substrat, qui peut être réalisé sur la base de la chimie suivante :
- le substrat est fonctionnalisé avec un silane dont l'extrémité libre comporte une fonction ester de méthyl ;
- le silane est déprotégé, par exemple sous l'action de l'acide chlorhydrique concentré, en donnant un acide carboxylique, puis il est activé par exemple sous l'action du N-hydroxysuccinimidine dans un solvant approprié tel que le tétrahydrofurane (THF), en donnant un ester activé ; et
- la sonde pourvue d'une fonction amine est déposée sur le substrat de façon à former une liaison amide covalente entre la sonde et la molécule de liaison sur le substrat.

Bien entendu, il serait possible d'employer d'autres chimies qui peuvent être par exemple basées sur des groupements thiol; époxy, acide carboxylique (fixé côté sonde), amine primaire (fixé côté surface), ...

D'une manière générale, l'invention va permettre de fabriquer des réseaux de dimensions, d'intégration (nombre de sondes par substrat), de densité (nombre de sondes par unités de surface), et de composition très diverses, c'est-à-dire avec des sondes constituées d'oligonucléotides, d'ADN, d'ADNc, d'ARN, d'acides nucléiques peptidiques (PNA), d'enzymes, d'immunoprotéines, de protéines, de cellules et de manière générale de substances biologiques, sur tous supports, et en particulier des supports en silice, silicium, métal ou polymère de 1 à 10 000 mm² ; la surface d'un plot étant comprise dans un cercle de diamètre 1 à 500 µm ; le nombre de plots pouvant varier de 1 à 10 000 unités par substrat ; des sondes d'espèce chimique différente peuvent être utilisées conjointement sur le même substrat, par exemple des oligonucléotides, des acides nucléiques peptidiques (PNA) et des protéines.

D'autres avantages, caractéristiques et détails de l'invention ressortiront du complément de description qui va suivre en référence à des dessins annexés, donnés uniquement à titre d'exemple et dans lesquels :
- la figure 1 est une vue simplifiée d'un dispositif de microprojection d'un microvolume de réactif sur un substrat,
- la figure 2 est un exemple de circuit de commande du dispositif de microprojection illustré à la figure 1,
- la figure 3 est une vue schématique pour illustrer la conception d'une batterie de dispositifs de microprojection,
- la figure 4 est une vue en perspective pour illustrer globalement un exemple de machine modulaire équipée d'une batterie de 256 dispositifs de microprojection,
- la figure 5 est une vue en perspective d'un module de la machine illustrée à la figure 4,
- la figure 6 est une vue suivant la flèche VI de la figure 5,
- la figure 7 est une vue en coupe suivant la ligne VII - VII de la figure 6,
- la figure 8 est une vue similaire à celle de la figure 7,
- la figure 9 est une vue schématique du principe de commande de la machine illustrée sur les figures 4 à 7,
- les figures 10 et 11 illustrent schématiquement la fabrication de 32 puces avec une machine du type de celle illustrée aux figures 4 à 7,
- les figures 12 et 13 montrent un substrat sur lequel sont formés des plots avant et après un processus de correction automatique de leurs positions sur le substrat,
- la figure 14 est une vue en perspective de la machine qui est équipée d'un système de visualisation pour contrôler la formation des plots,
- la figure 15 est une vue de côté de la figure 4, et
- les figures 16 et 17 sont des vues partielles semblables à celles des figures 14 et 15 pour illustrer une variante du montage du système de visualisation.

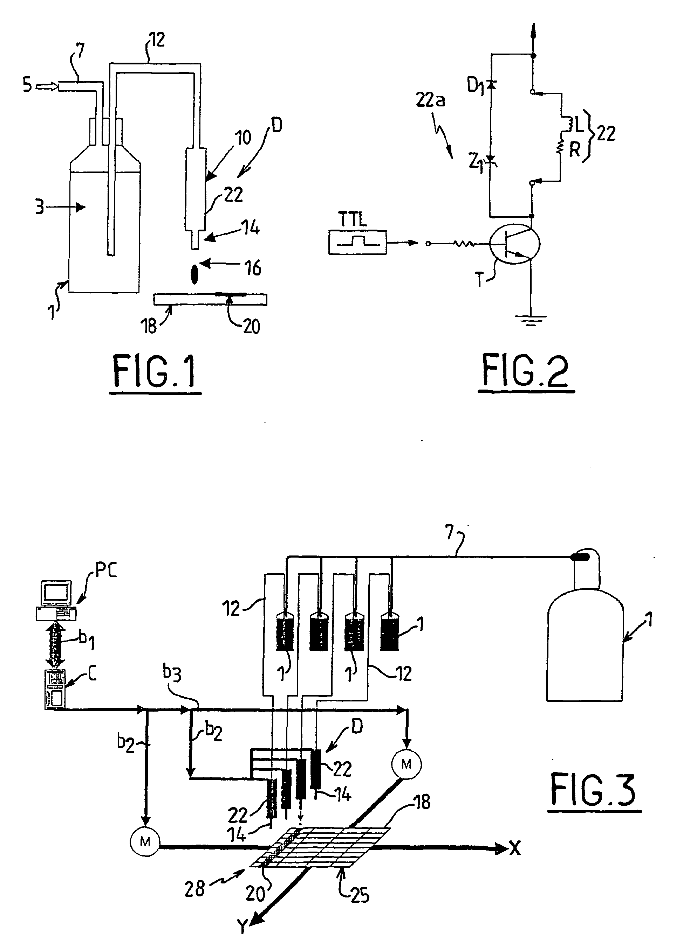

Comme cela est illustré à la figure 1, un dispositif de microprojection D selon l'invention comprend au moins :
- un réservoir 1 dans lequel est stocké un réactif 3 sous forme liquide qui est constitué d'au moins une sonde diluée dans un solvant approprié,
- une source 5 de gaz sous pression qui est reliée au réservoir 1 par un tube d'entrée 7, le gaz utilisé étant un gaz inerte tel l'hélium par exemple,
- un actionneur 10 qui est relié au réservoir 1 par un tube de sortie 12 qui plonge dans le réactif 3, et
- une buse d'éjection 14 qui est montée en sortie de l'actionneur 10.

D'une manière générale, l'actionneur 10 a pour fonction de commander la projection d'un microvolume de réactif 3 au travers de la buse 14. L'actionneur 10 peut prendre au moins deux états respectivement ouvert et fermé. A l'état ouvert pendant un temps déterminé, l'actionneur 10 permet le passage du réactif 3 dans la buse 14 sous l'effet de la pression du gaz régnant dans le réservoir 1 et, si cette pression est suffisante, l'éjection d'un microvolume sous la forme d'une microgoutte 16 qui vient se déposer sur la surface activée d'un substrat 18 de façon à former un plot ou spot 20 après élimination du solvant.

L'actionneur 10 est avantageusement constitué par une microélectrovanne 22. En effet, une microélectrovanne présente un très faible volume mort, et est moins sensible aux variations de viscosité du réactif, ce qui n'est pas le cas pour un actionneur piloté par un élément piézo-électrique par exemple. La microélectrovanne 22 est pilotée par un circuit de commande 22a du type de celui schématiquement illustré à la figure 2, où d'un point de vue électrique, la microélectrovanne 22 est équivalente à une résistance R et une inductance L montées en série. Le circuit de commande 22a peut être ramené à un transistor T dont la base est pilotée par des signaux de commande de type TTL par exemple et dont l'émetteur est à la masse. Le circuit électrique équivalent RL de la microélectrovanne 22 est monté dans le collecteur du transistor T, qui est relié à une tension d'alimentation. Un montage série d'une diode D₁ et d'une diode Zéner Z₁ est branché en parallèle sur le circuit RL pour réduire l'effet parasite des oscillations de l'inductance L, la diode Z₁ limitant la tension, alors que la diode D₁ supprime le courant inverse.

D'une manière générale, le volume de réactif qui est éjecté par la buse 14 et son étalement sur le substrat dépendent de plusieurs facteurs, en particulier :
- du matériau, de la nature et de la géométrie des connexions hydrauliques,
- des pertes de charge du dispositif,
- de la nature et de la géométrie de la buse d'éjection,
- du réactif stocké dans le réservoir,
- de la durée d'ouverture de la microélectrovanne, de la pression dans le réservoir qui stocke le réactif, de la distance qui sépare la buse d'éjection et le substrat, ...

A titre d'exemple, le circuit de commande 22a est conçu de manière à pouvoir ouvrir et fermer rapidement la microélectrovanne 22 dans un temps de l'ordre de 0,01 ms à 1s pour éjecter un volume de réactif de l'ordre de 0,1 nl à 1000 nl, en présence d'une surpression dans le réservoir 1 de l'ordre de 0,05 à 1 bar.

D'une manière générale, on va utiliser une batterie de dispositifs de microprojection pour projeter des microgouttes de réactifs (sondes) dilués dans un solvant, en particulier sur des substrats plans afin de procéder à une réaction chimique d'accrochage des sondes sur le substrat après évaporation du solvant, avec pour résultat un substrat sec sur lequel une pluralité de sondes est greffée. Avantageusement, on utilisera une batterie de dispositifs de microprojection indépendants pour pouvoir réaliser simultanément une pluralité de biopuces, sachant que chaque biopuce peut être éventuellement différente du point de vue de la disposition des sondes sur la biopuce car il n'y a pas de lien entre la disposition des dispositifs de microprojection et la disposition des plots sur la biopuce. Par ailleurs, les réservoirs des dispositifs de microprojection peuvent être changés indépendamment les uns des autres, et on peut attribuer un dispositif de microprojection par sonde pour éviter des problèmes de contamination inter-sondes à l'intérieur même des dispositifs de microprojection.

Selon un montage de base illustré à la figure 3, on prévoit une batterie de dispositifs de microprojection indépendants D qui sont au nombre de seize et disposés suivant une ligne. Avantageusement, pour réduire le nombre des connexions, une seule source 5 de gaz sous pression est utilisée pour alimenter l'ensemble des réservoirs 1, ce qui permet également de travailler en régime permanent et d'empêcher l'évaporation des solvants. D'une manière générale, plusieurs substrats activés 18 peuvent être placés sur un plateau 25, et on prévoit d'assurer un mouvement relatif entre la batterie de dispositifs de microprojection D et le plateau 25 pour former des plots 20 sur les substrats 18, sachant que le plateau 25 peut être dimensionné pour supporter de 1 à 10 000 substrats, typiquement une centaine pour assurer une production de masse. A titre d'exemple, la batterie de dispositifs de microprojection peut délivrer des quantités de fluide de l'ordre de 1 à 30 nl avec une durée d'ouverture de l'ordre de 0,1 à 2 ms sous une pression de 0,01 à 0,5 bars, de manière à former des plots de l'ordre de 100 à 1 000 µm de diamètre et un écart entre plots de l'ordre de 50 à 500 µm.

Dans l'exemple illustré sur la figure 3, la batterie de dispositifs de microprojection D est fixe, alors que le plateau 25 est monté sur un dispositif motorisé 28 à mouvements croisés en XY sous la commande de deux moteurs M. Avantageusement, les microélectrovannes sont alignées suivant une ligne parallèle à l'axe Y de déplacement du plateau 25.

Les microélectrovannes 22 sont pilotées à partir d'un organe de commande, un PC par exemple, associé à une carte électronique C reliée au PC par un bus b₁ de commande, d'adresse et de données, par un bus b₂ aux dispositifs de microprojection D et par un bus b3 aux moteurs M. Le PC de commande permet de synchroniser l'ouverture des microélectrovannes 22 et la position du plateau 25 porte-substrat, de telle manière que les microgouttes soient distribuées à des endroits précis et voulus des substrats 18.

Ainsi, pour fabriquer un lot de puces, il suffit de déplacer rapidement et successivement le plateau 25 sous les buses d'éjection 14 des microélectrovannes 22 en activant la projection de microgouttes de réactif au passage des substrats 18. Immédiatement après la projection, le solvant est éliminé pour former des plots 20 comprenant les sondes fixées aux substrats 18 par des liaisons covalentes, d'une façon connue en soi.

Par ailleurs, il est possible de projeter plusieurs fois la même microgoutte de réactif sur les substrats 18, sur le même plot 20 ou plus avantageusement sur plusieurs plots, de manière à constituer un motif qui permettra de faciliter la lecture des puces en améliorant éventuellement la sûreté du diagnostic par un effet de redondance.

Concrètement, il n'y a pas de contamination possible ni entre les dispositifs de microprojection D, ni entre ceux-ci et le substrat 18, l'écart entre les buses d'éjection 14 et le substrat 18 étant de l'ordre de 0,01 mm à 10mm, de préférence de l'ordre du millimètre, soit nettement supérieur au diamètre de la microgoutte de réactif projetée.

A partir de ce montage de base, il est passible de concevoir une machine 30 pouvant fonctionner à grande vitesse puisque le réactif est projeté sans être en contact avec le substrat. Cette vitesse de fonctionnement est essentiellement limitée par celle du déplacement du plateau 25 qui peut varier de l'ordre de 1 cm/s avec des moteurs M à courant continu jusqu'à 10 m/s avec des moteurs linéaires magnétiques.

Avantageusement, la batterie de dispositifs de microprojection D est agencée sous la forme d'une matrice à plusieurs rangées, et chaque rangée est conçue de façon modulaire et amovible.

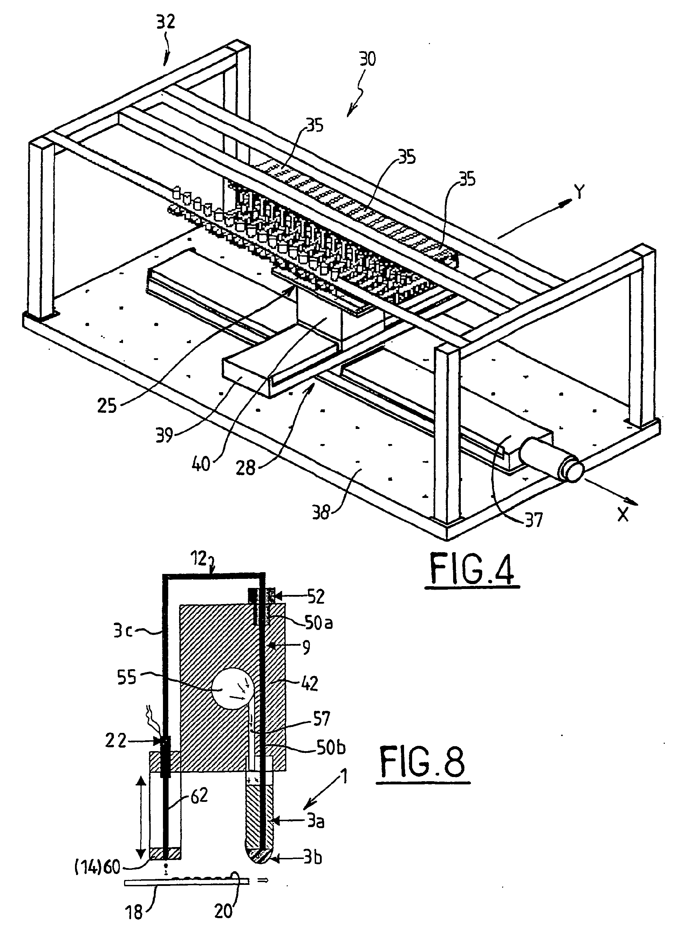

Une machine 30 avec une batterie de 256 dispositifs de microprojection D est schématiquement illustrée sur la figure 4. La machine 30 présente un châssis 32 comprenant un portique qui supporte notamment seize double-rails 34 parallèles entre eux, le long desquels sont montés de manière amovible seize modules 35 qui supportent chacun seize réservoirs 1 et microélectrovannes 22 associées. Les substrats activés 18 sont disposés sur un plateau 25 déplaçable par un dispositif motorisé 28 à mouvements croisés en XY de grande course et de grande vitesse de déplacement.

Le dispositif motorisé 28 est constitué par un bloc de guidage longitudinal 37 (axe X) fixé sur une embase 38 du châssis 32, par un bloc de guidage transversal 39 (axe Y) monté coulissant sur le bloc de guidage longitudinal 37, et par un bloc de support 40 monté coulissant sur le bloc de guidage transversal 39 et qui supporte le plateau 25.

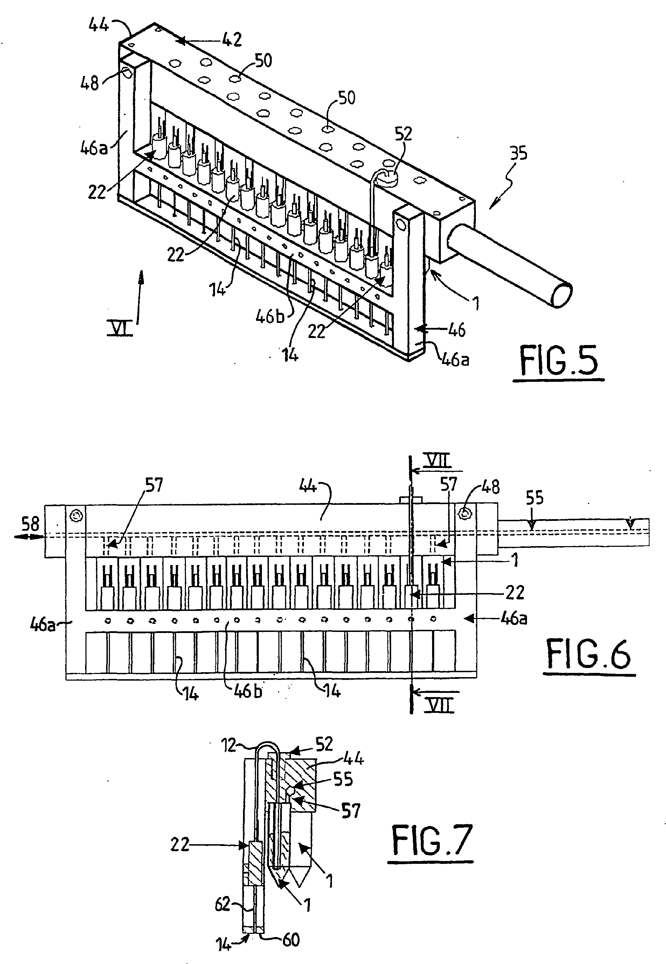

Selon un exemple de réalisation illustré sur les figures 5 à 7, chaque module 35 comprend une ossature 42 qui est constituée (figures 5 et 6):
- d'un premier bloc de support 44 sous la forme d'un barreau pour supporter seize réservoirs 1 et assurer également les connexions fluidiques nécessaires pour mettre sous pression le réactif 3 stocké dans les réservoirs 1 ; et
- d'un second bloc de support 46 en forme de H avec deux montants parallèles 46a reliés entre eux par une traverse horizontale 46b qui supporte seize microélectrovannes 22.

Les extrémités supérieures des deux montantes 46a se raccordent vers les deux extrémités du premier bloc de support 44 par des moyens de fixation 48, les réservoirs 1 se trouvant situés à un niveau supérieur à celui des buses d'éjection 14 des microélectrovannes associées 22.

Les seize microélectrovannes 22 sont alignées le long de la traverse 46b pour être sensiblement au droit des seize réservoirs 1 associés, sachant que ces derniers peuvent être avantageusement disposés en quinconce (figure 5) pour réduire la longueur du module 35, limiter les déplacements en Y du plateau 25, et augmenter la vitesse de fonctionnement de la machine 30.

A cet effet, le premier bloc de support 44 est percé de part en part par seize ouvertures 50 disposées en quinconce. Chaque ouverture 50 présente une partie 50a qui se prolonge par une partie 50b. Chaque réservoir 1 est relié à la microélectrovanne 22 associée par un tube de sortie 12 en PTFE par exemple et en forme de U inversé dont une branche plonge à l'intérieur du réservoir correspondant 1, et dont l'autre branche traverse une ouverture 50 pour être reliée à la microélectrovanne 22 associée.

Chaque tube de sortie 12 peut être fixé au premier bloc de support 44 par un raccord rapide 52 de type vissant ou analogue qui vient se monter dans la partie 50a des ouvertures 50. Avantageusement, chaque tube de sortie 12 est scindé en deux tronçons qui se raccordent entre eux et de manière étanche au niveau du raccord vissant 52, ce qui permet une connexion - déconnexion rapide entre le réservoir 1 et la microélectrovanne associée 22 et facilite les opérations de montage et de maintenance.

En se rapportant aux figures 6 et 7, le premier bloc de support 44 en forme de barreau est également percé de part en part par un canal longitudinal ou canal principal 55. Une extrémité de ce canal 55 est raccordée à une source 5 de gaz sous pression par un raccord de type auto-obturant pour mettre simultanément en surpression les réactifs 3 stockés dans tous les réservoirs 1 par des canaux transversaux 57 également percés dans le premier bloc de support 44 et qui débouchent tous dans le canal principal 55 d'une part, et dans les réservoirs 1 à raison d'un canal 57 par réservoir 1 d'autre part. L'autre extrémité du canal principal 55 est reliée à une vanne de purge 58.

Il est également possible de raccorder les modules 35 à des sources de gaz ayant des pressions différentes.

Les buses d'éjection 14 sont alignées et montées de manière à être situées en regard des substrats 18 et à une distance de l'ordre du millimètre. Chaque buse d'éjection 14 peut être simplement constituée par un tube en PTFE ayant une géométrie adaptée qui vient se raccorder à la sortie de la microélectrovanne 22 associée.

Avantageusement, comme cela est illustré à la figure 7, chaque buse d'éjection 14 est constituée d'une pièce 60 tel qu'un substrat en saphir, en rubis, en silicium,..., ou d'une pièce en céramique, en inox, qui est percé d'un orifice d'éjection d'un diamètre de l'ordre de 1 µm à 100 µm, typiquement de 75 µm, et raccordé à la sortie de la microélectrovanne 22 par un tube de connexion 62.

Par ailleurs, il est particulièrement avantageux de disposer les buses d'éjection 14 au plus près des microélectrovannes 22 associées en réduisant au maximum la longueur des tubes de connexion 62, de façon à transmettre avec le moins de pertes de charge possibles la pression d'entrée des modules 35 au volume de réactif qui va être projeté. Une telle disposition permet de réduire la pression d'entrée, de mieux la répartir dans les microélectrovannes 22 et de diminuer le volume projeté. Par ailleurs, cela permet de réduire les phases d'amorçage qui seront explicitées plus loin.

En fonctionnement normal d'un module 35, la vanne de purge 58 est fermée, ainsi que toutes les microélectrovannes 22. Pour amorcer un module 35 avant la fabrication des puces, chaque microélectrovanne 22 est ouverte pendant un temps déterminé, de façon à ce que la pression du gaz dans le réservoir 1 expulse l'air du tube de sortie 12 et des connexions, puis fasse progresser le réactif jusqu'au ras de la buse d'éjection 14 correspondante.

En pratique, on procède à quelques projections d'amorçage en disposant une cuvette à la place du plateau 25. Comme le réactif reste sous pression constante, il suffit d'une commande sur la microélectrovanne 22 pour provoquer la projection d'une microgoutte de réactif.

Pendant la fabrication des puces et si le délai d'attente entre deux tirs d'un même dispositif de microprojection D est trop long, on effectue alors à une phase de miniamorçage en procédant à quelques microprojections sur une zone poubelle du plateau 25. Ce miniamorçage permet de compenser une éventuelle évaporation du réactif au niveau de la buse d'éjection 14.

La conception modulaire de la machine 30 permet de dégager un module 35 indépendamment des autres en le faisant glisser sur les rails 34, rendant ainsi possible le changement des réservoirs 1 et la maintenance sur les microélectrovannes 22.

D'une manière générale, les puces sont réalisées sur des substrats verre, silicium, métal, oxyde métallique ou polymère, ces substrats homogènes ou hétérogènes étant préalablement fonctionnalisés et pouvant avoir des formats différents.

Un substrat très utilisé est une lame de microscope de dimensions 76 mm x 26 mm par exemple, car son prix de revient est faible.

Par ailleurs, la réduction de la surface des puces permet d'en augmenter le nombre fabriqué sur un plateau; et d'augmenter ainsi la productivité de la machine. Cependant, la réduction de la surface des puces reste limitée par la résolution du système de microprojection, à savoir le diamètre des plots et aussi l'écartement entre les plots qui dépendent de nombreux facteurs comme par exemple : le microvolume projeté, la stabilité directionnelle de la projection, l'étalement des microgouttes, l'état de surface du substrat, ....

D'une manière générale, on peut concevoir la machine de manière à ce que le diamètre des plots soit de l'ordre de 1 µm à 500 µm, plus particulièrement entre 200 µm et 300 µm, et un écartement entre les plots généralement compris entre 1,25 à 4 fois le diamètre des plots.

Comme cela est illustré à la figure 8, le volume de réactif 3 est constitué d'un volume disponible 3a, d'un volume mort 3b situé au-dessous du tube de sortie 12 et d'un volume d'amorçage 3c allant jusqu'au substrat 60 formant la buse d'éjection 14. Le volume de réactif projetable est constitué du volume disponible 3a et du volume d'amorçage 3c, sachant qu'il est également possible de projeter le volume mort 3b à condition de compenser la variation de débit qui intervient lorsque la surface du réactif soumise à la pression du gaz change après épuisement du volume disponible 3a.

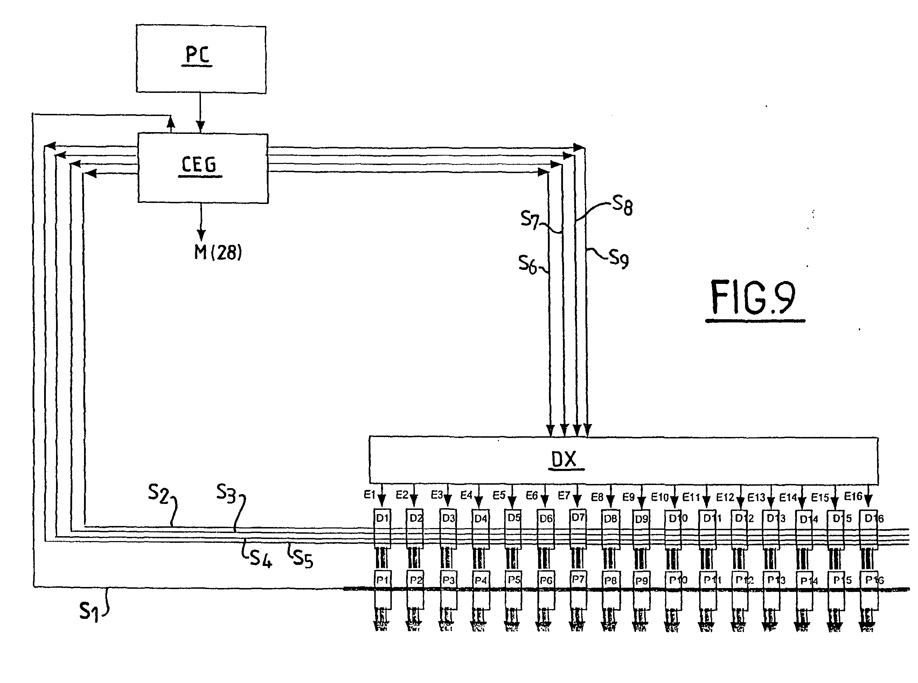

La figure 9 illustre sous la forme d'un schéma-bloc un exemple de réalisation d'un dispositif de commande 30a de la machine 30, qui se compose d'un ordinateur PC en liaison avec une commande électronique générale CEG qui gère :
- les déplacements du plateau 25 en commandant de manière appropriée les deux moteurs M du dispositif 28 via deux cartes de puissance en prenant en compte les rampes d'accélération et de décélération,
- la synchronisation des déplacements en XY du plateau 25 avec l'ordre de tir, et
- là sélection des modules 35 et des microélectrovannes 22 des modules sélectionnés.

Concrètement, le dispositif de commande 30a commande seize modules 35 de rang i (i = 1 à 16), chacun d'entre eux étant associé à seize dispositifs de microprojection de rang i (j = 1 à 16), soit au total 256 dispositifs de microprojection (i,j).

Pour contrôler ces 256 dispositifs de microprojection, différents dispositifs électroniques sont connus de l'homme de l'art. A titre d'exemple, on va décrire un dispositif de commande qui est basé sur le principe suivant :
- un circuit de puissance 22a (figure 2) par moyen de microprojection, soit donc au total 256 transistors de commande ;
- une commande de déclenchement commune aux 256 transistors de puissance ;
- un signal de sélection spécifique pour chaque transistor ;
- un démultiplexage à 2 étages permettant de sélectionner
   ■ un module de rang i ;
   ■ les 16 moyens de microprojection de même rang j pour l'ensemble des modules, soit (1,j) à (16,j) ;
ce qui permet par intersection des 2 sélections d'actionner le signal de sélection du transistor (i,j).

Concrètement, chaque module 35 est relié à une carte électronique de commande qui est scindée en deux parties : une partie logique Di et une partie puissance Pi.

La partie logique Di est constituée d'un démultiplexeur à quatre entrées qui sont respectivement reliées à quatre sorties de commande S₂, S₃, S₄ et S₅ de la carte CEG, et à seize sorties qui sont respectivement reliées à l'un des entrées de seize portes ET(ij) à deux entrées (non représentées), les sorties des portes ET étant disposées sur les bases des 16 transistors de puissance de la partie puissance Pi, les 16 portes ET constituant ainsi les circuits de sélection des transistors de puissance.

La partie puissance Pi est scindée en seize circuits de commande 22a d'une microélectrovanne 22 et comprenant un transistor T dont la base est reliée à la sortie de la porte ET (ij) correspondante.

L'autre entrée des portes ET (ij) est reliée à une sortie de commande S₁ de la carte CEG, constituant ainsi la commande de déclenchement commune des tirs (ce qui particulièrement avantageux pour accéder au réglage de la durée d'ouverture des moyens de microprojection).

Par ailleurs, chaque démultiplexeur Dᵢ présente une entrée d'inactivation Eᵢ, et les seize entrées Eᵢ de tous les démultiplexeurs D₁ à D₁₆ sont respectivement reliées aux seize sorties d'un démultiplexeur DX à quatre entrées et seize sorties. Les quatre entrées du démultiplexeur DX sont respectivement reliées à quatre sorties de commande S₆, S₇, S₈ et S₉ de la carte CEG.

Ainsi, pour commander un des 256 dispositifs de microprojection de la machine 30, la carte CEG pilotée par le PC :
- sélectionne l'un des 16 modules 35 de la machine 30 via les quatre sorties de commande S₆ à S₉ et le démultiplexeur DX, ce qui a pour effet d'activer l'un des 16 multiplexeurs Di ;
- sélectionne via les quatre sorties S₁ à S₄ celui des seize transistors de puissance du module 35i correspondant au rang j du dispositif de microprojection qui doit être activé ;
- active ainsi une première entrée de la porte ET (ij) ;
- envoie un signal de commande de tir sur sa sortie de commande S₁ à la seconde entrée de toutes les portes ET, ce qui a pour effet de commander le dispositif de microprojection sélectionné dont la porte ET (ij) est la seule à avoir ses deux entrées activées.

Un logiciel et une électronique assurent la synchronisation entre les déplacements du plateau 25 et les projections de gouttes de réactif. Avantageusement, les projections sont faites suivant un tir à la volée pour réduire les phases d'accélération/décélération des moteurs M du dispositif mobile 28 qui porte le plateau 25. Un tel tir à la volée est particulièrement avantageux suivant l'axe Y qui est parallèle aux modules 35. Eventuellement un séchage rapide des microgouttes projetées, avantageusement par un plateau chauffant, est alors utile pour réduire les risques d'étalement des microgouttes de réactif liés au déplacement rapide du plateau 25.

Pour accroître la vitesse de fabrication, la machine peut traiter les substrats en parallèle, soit par exemple une matrice de 4 x 8 lames de microscope pour fabriquer 32 puces.

Selon un fonctionnement normal, c'est-à-dire avec une surpression dans les réservoirs 1 de l'ordre de 0,25 bar d'un gaz neutre tel l'hélium, et une durée d'ouverture des microélectrovannes 22 de l'ordre de 1ms, les gouttes de réactif projetées ont un volume de l'ordre de 10nl. La machine permet alors de réaliser des puces constituées d'une matrice de plots d'un diamètre de l'ordre de 100µm à 400µm avec un écart entre les centres des plots de l'ordre de 200µm à 1000µm.

A titre d'exemple, avec un écart de l'ordre de 10mm entre deux buses d'éjection 14 et que l'écart, centre à centre, entre deux plots voisins de l'ordre de 0,5mm sur la même ligne d'une puce, le plateau 25 devra parcourir une distance de l'ordre de 10,5mm avant de projeter les sondes. Ainsi, si on suppose que la vitesse de translation du plateau 25 est de l'ordre de 15cm/s, le temps nécessaire à cette translation sera alors de l'ordre de 70ms, c'est-à-dire une durée très supérieure à la durée d'ouverture de la microélectrovanne 22 qui est de l'ordre de 1 ms.

Il est donc utile d'étudier l'influence des vitesses de translation du plateau 25 sur la vitesse de fabrication globale des puces.

En utilisant par exemple des moteurs linéaires magnétiques, on peut atteindre des vitesses de translation de l'ordre de 10m/s. Il s'avère que la durée d'ouverture des microélectrovannes 22 n'a pas d'influence sur le fonctionnement de la machine tant que la vitesse de translation du plateau n'atteint pas 1mls. En effet, il faut environ 10ms pour parcourir la distance entre deux plots, soit 10,5mm, durée qui est approximativement d'un ordre de grandeur supérieur à la durée d'ouverture de 1 ms pour les microélectrovannes 22. Ainsi, la vitesse de fabrication des puces peut être améliorée en augmentant la vitesse de déplacement du plateau 25 jusqu'à une valeur de l'ordre 1m/s.

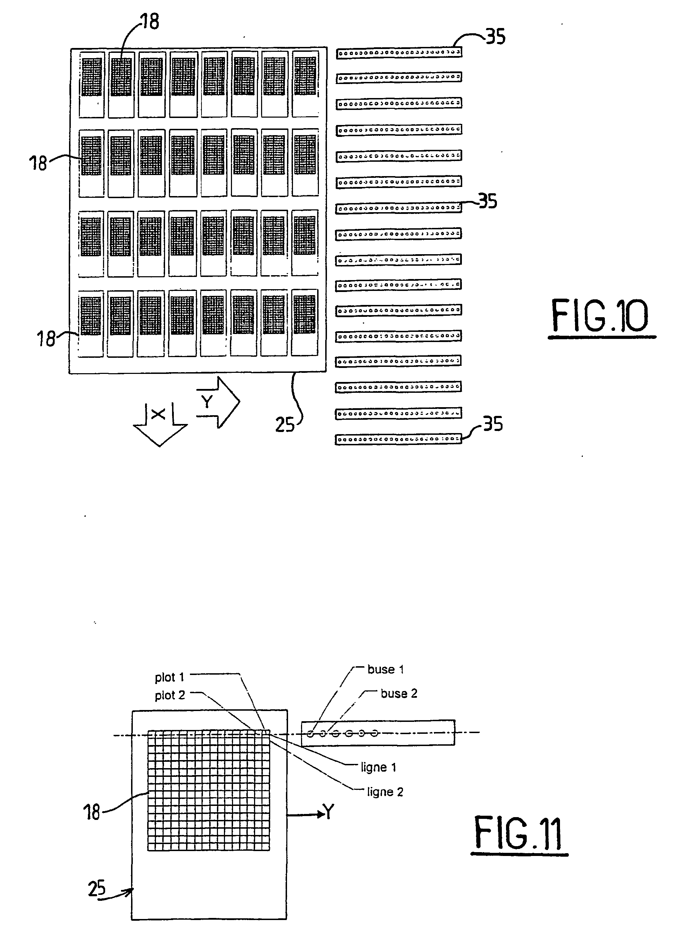

Un exemple de fabrication de 32 puces est décrit ci-après en référence aux figures 10 et 11.

Par simplification, on suppose que les puces sont constituées de 256 plots avec un type de sonde par plot et une machine 30 équipée de 16 modules. On va par ailleurs envisager un déplacement du plateau 25 avec un arrêt entre chaque tir ou projection selon un mode pas à pas, et un déplacement à vitesse constante en procédant à un tir à la volée suivant l'axe Y.

Les conditions opératoires sont donc les suivantes pour la fabrication d'une puce à 16 x 16 plots :
- une microélectrovanne 22 dédiée à chaque plot avec un seul plot par sonde ;
- les 32 puces sont posées sur le plateau 25 par lots de 8 suivant l'axe Y et selon 4 rangées suivant l'axe X ;
- les buses d'éjection 14 de chaque module 35 sont alignées par rapport aux 16 plots de puces et orientées suivant l'axe Y ; et
- les 16 microélectrovannes 22 d'un module 35 doivent projeter seulement sur les 16 plots de la ligne i de chaque puce.

Le mode opératoire est le suivant :
a/ Etape a : positionnement du plateau 25 suivant l'axe X pour que la première ligne de 16 plots de la première rangée des 8 premières puces soit alignée sur la rangée de microélectrovannes 22 du premier module 35, sachant que la buse d'éjection 14i doit projeter dans le plot i de chacune des 8 puces, le plateau 25 se déplaçant suivant l'axe Y, et que le mode de calcul du plot le plus proche de la buse d'éjection concernée revient à dire que le plateau 25 doit toujours avancer suivant l'axe Y sans jamais reculer jusqu'à ce que l'on arrive au bout des 8 lignes de plots en ayant projeté sur tous les plots ;
b/ Etape b: positionnement du plateau 25 suivant l'axe X pour que la rangée des 16 microélectrovannes 22 du module 35j soient alignées sur la ligne j suivante les 8 premières puces, et déplacement suivant l'axe Y d'une manière analogue à l'étape a;
c/ Etape c : répétition de l'étape b jusqu'à la 16^{éme} ligne de la première rangée de 8 puces ;
d/ Etape d : passage à la deuxième rangée de 8 puces et répétition des étapes a, b et c ; et
e/ Etape e : répétition de l'étape d jusqu'à la 4^{ème} rangée de 8 puces.

Ce processus de fabrication a donné un durée de fabrication de l'ordre 28 minutes pour la fabrication de 32 puces en mode pas à pas à une vitesse maximum de l'ordre de 15cm/s entre chaque arrêt, la vitesse moyenne étant limitée par les phases nécessaires d'accélération et de décélération pour les moteurs M de déplacement du plateau 25, alors que cette durée n'est que de l'ordre de quatre minutes pour le même plateau en mode de tir à la volée suivant l'axe Y avec une vitesse de déplacement constante de l'ordre de 15cm/s et un mode pas à pas suivant l'axe X.

La vitesse de fabrication selon l'exemple décrit précédemment est donc de l'ordre de 50 puces/heure, en mode pas à pas, mais elle peut atteindre une vitesse de 500 puces/heure en mode de tir à la volée.

Cependant, avec l'utilisation de moteurs M plus rapides, en mode de tir à la volée suivant l'axe Y avec une vitesse de l'ordre de 1m/s, la productivité de la machine peut atteindre 4500 puces/heure.

Par ailleurs, il est également possible d'évaluer l'influence d'une réduction de la surface des puces sur la productivité de la machine. En effet, on a supposé jusqu'à maintenant qu'il n'y avait qu'une puce par substrats, alors que pour une puce de 400 plots, la surface utile est de 6 x 6mm avec des plots de 250µm de diamètre et un espacement inter-plots de 300 µm. Ainsi, la surface totale de la puce est de 8 x 8mm en tenant compte des marges de sécurité nécessaires dans la pratique. Il est donc envisageable de réaliser 18 puces (6 x 3) par substrat, ce qui porte la vitesse de fabrication à 81000 puces/heure, ce qui démontre bien que le procédé de projection et la machine de mise en oeuvre selon l'invention, sont bien adaptés à une production de masse.

D'une manière générale, le débit de réactif 3 qui est projeté par les buses d'éjection 14 peut être contrôlé par le temps d'ouverture de la microélectrovanne 22 et/ou la pression du gaz à l'intérieur des réservoirs 1.

Par ailleurs, l'invention met en oeuvre une procédure de décontamination rapide des dispositifs de microprojection, ainsi qu'une procédure de calibration et de contrôle qualité qui vont être décrits ci-après.

A partir de la machine 30 précédemment décrite avec 256 dispositifs de microprojection, on peut fabriquer en grande série une puce avec 1024 sondes. A cet effet, il suffit d'équiper la machine avec quatre dispositifs à 256 dispositifs de microprojection montés en ligne.

Par ailleurs, il est possible de faire varier très facilement le débit des dispositifs de microprojection en jouant sur la pression du gaz d'une part, et/ou sur la durée d'ouverture des microélectrovannes. On peut ainsi calibrer le microvolume de réactif projeté pour chaque dispositif de microprojection, de façon à compenser les dispersions de fabrication des microélectrovannes et ce, avantageusement au cours d'un tir à la volée. L'augmentation de débit permet de rincer très efficacement chaque dispositif de microprojection soit de manière indépendante, soit collectivement. En cas d'obturation accidentelle, on peut également déboucher un dispositif de microprojection en augmentant la pression de débit de la microélectrovanne.

Pour cela, après la fabrication des puces, le processus de décontamination consiste à remplacer les réservoirs contenant les sondes par des réservoirs contenant un solvant de nettoyage, de l'eau par exemple, et à actionner les microélectrovannes avec un fort débit pour nettoyer l'ensemble des dispositifs de microprojection.

D'une manière générale, lorsqu'une fabrication précise est requise, il est nécessaire de tenir compte de certaines imperfections de la machine 30 telle que précédemment décrit. Ces imperfections concernent notamment la dispersion des tirs entre plusieurs microélectrovannes 22, l'imprécision de l'alignement des buses d'éjection 14, l'imprécision de l'assemblage des modules 35, et des écarts de position du dispositif motorisé 28 à mouvements croisés.

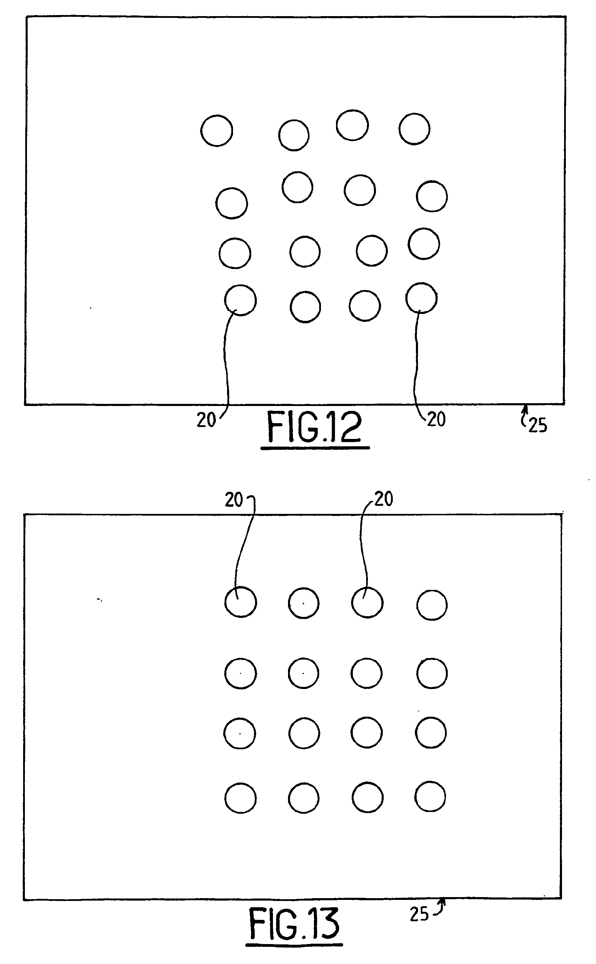

Ainsi, l'addition des imperfections précitées peut conduire à la réalisation de réseaux de puces irréguliers, comme cela est schématiquement représenté sur la figure 12 pour un réseau constitué par la microprojection sur un substrat 18 de seize microgouttes de réactif.

Pour pallier ces imperfections, une méthode consiste à calibrer la machine 30 avant le lancement d'une fabrication de puces en série, de manière à obtenir une bonne reproductibilité de fonctionnement avec des réseaux réguliers de microgouttes ou de plots formés après élimination du solvant.

Cette méthode consiste par exemple :
- à faire tirer les microélectrovannes 22 sur un substrat intermédiaire transparent,
- à repérer la position des plots, par exemple au moyen d'une caméra disposée sous le substrat, et les écarts entre les positions repérées et les positions souhaitées pour les plots, et
- à corriger la trajectoire du plateau 25 qui supporte le substrat à partir d'un tableau de correction mémorisé dans une mémoire, de sorte qu'au moment de la microprojection, le décalage xy du plateau compensera la position de l'impact vis-à-vis des autres microgouttes, pour obtenir un réseau régulier tel que représenté sur la figure 13.

Ce type de correction est possible car, d'une manière générale, les microprojections sont effectuées de manière séquentielle, c'est-à-dire que les microélectrovannes 22 tirent les unes après les autres. Par contre, une telle correction est difficilement compatible avec un fonctionnement du type à la votée en mode de déplacement XY, c'est-à-dire lorsque plusieurs microélectrovannes tirent en même temps.

Cependant, dans ce cas, on peut arriver à un compromis avantageux qui peut consister :
à modifier la conception des modules 35 de façon à corriger l'imprécision de chaque tir suivant l'axe X, ceci pouvant être obtenu en alignant les microélectrovannes 22 une à une par un réglage mécanique, en prévoyant par exemple les degrés de liberté en rotation nécessaires sur chaque buse d'éjection,
- à procéder à une calibration suivant l'axe Y,
- à faire fonctionner la machine avec un tir à la volée suivant l'axe Y, et
- à déplacer le plateau 25 en mode pas à pas suivant l'axe X.

Par ailleurs, le microvolume de réactif projeté par une microélectrovanne dépend notamment de sa durée d'ouverture et/ou de la pression du gaz exercée sur le réactif. Or, ce microvolume dépend également de la construction mécanique de la microélectrovanne. Dans le cas d'une machine avec 256 dispositifs de microprojection, cela peut conduire à une dispersion des microvolumes projetés en entraînant la formation de réseaux de plots irréguliers.

Pour résoudre ce problème, une première solution selon l'invention consiste à classer par module les microélectrovannes ayant des volumes de projection proches et à compenser les écarts entre les modules en ajustant la pression du gaz sur chaque module.

Cependant, une solution plus avantageuse consiste à faire varier la durée d'ouverture des microélectrovannes de façon à compenser les dispersions des microvolumes projetés.

Une telle procédure de calibration du microvolume projeté peut être effectuée avant le lancement de la fabrication en série, en pesant par exemple 1000 microprojections de la même microélectrovanne dans un réservoir, ou en ligne, en pesant la microprojection d'une microélectrovanne avec une microbalance à quartz disposée sur le plateau mobile. Une telle méthode de calibration est avantageuse, car elle permet de contrôler le microvolume projeté d'une façon régulière pendant la fabrication des puces, et de détecter d'éventuels problèmes, comme par exemple une obturation accidentelle, une variation du volume par vieillissement des microélectrovannes, des microfuites soudaines, etc.

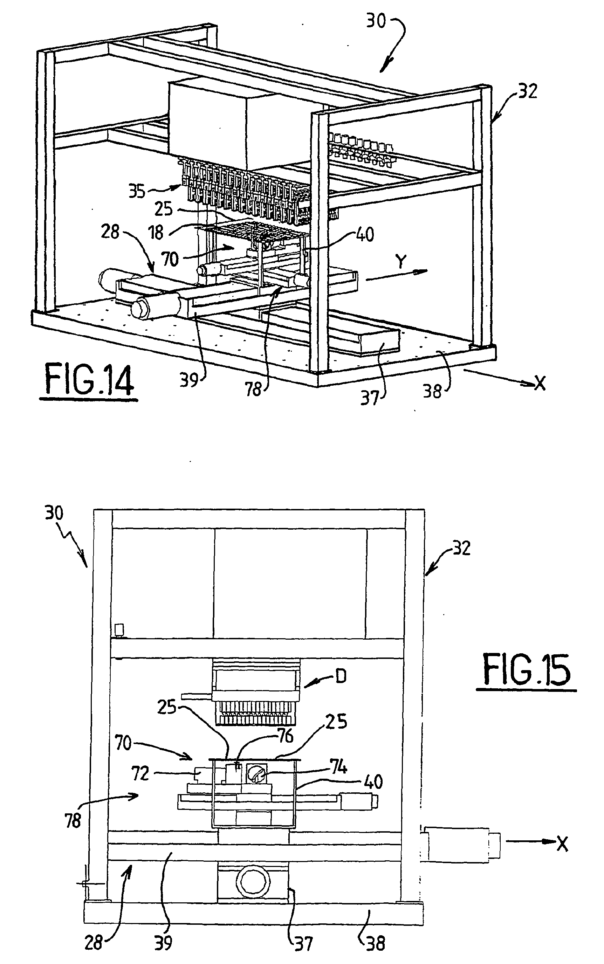

Enfin, selon l'invention, il est également possible de vérifier si la microprojections d'une microgoutte a bien eu lieu en utilisant un système de visualisation 70, comme cela est schématiquement illustré sur les figures 14 et 15.

Le système de visualisation 70 est placé sous le plateau 25 et, à titre d'exemple, comprend une caméra 72, un miroir 74 à 45°, un zoom de grandissement 76 et un dispositif d'éclairage (non représenté), pour visualiser la projection des microgouttes de réactif ou la formation des plots sur les substrats 18 par transparence et par en dessous.

Selon le mode de réalisation illustré sur les figures 14 et 15, le support 40 du plateau 25 est creux de manière à y loger le système de visualisation 70 qui est lui-même monté sur un dispositif motorisé 78 à mouvements croisés en XY du même type que celui utilisé pour déplacer le plateau 25.

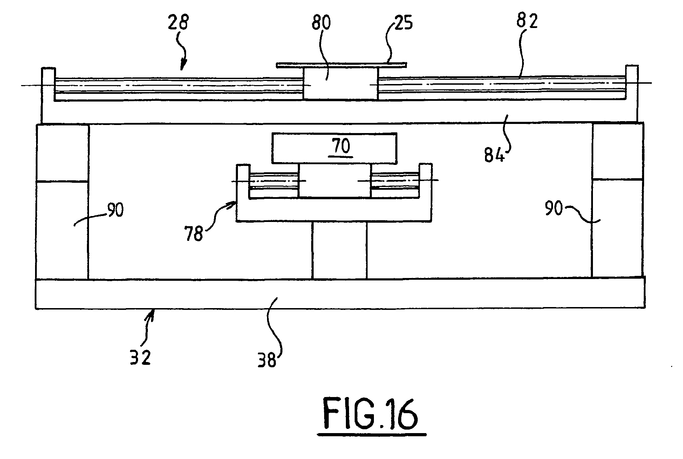

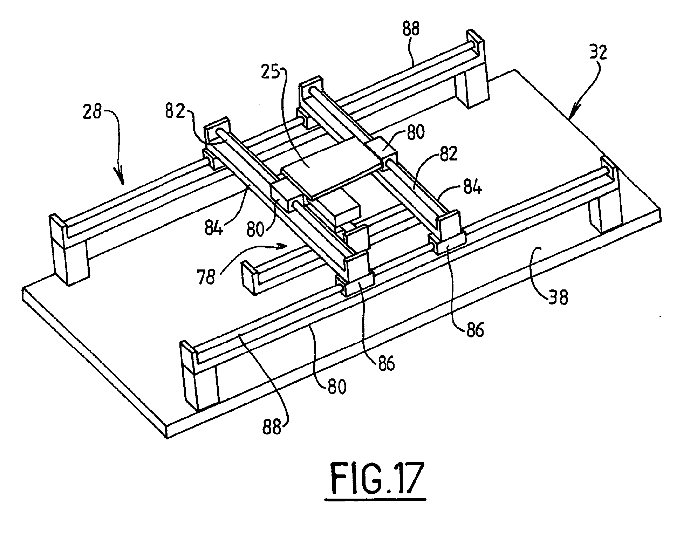

Lorsque la vitesse de déplacement du plateau 25 devient importante, il est avantageux de dissocier les mouvements du plateau 25 et du système de visualisation 70 pour répartir les masses, selon un autre mode de réalisation qui est illustré aux figures 16 et 17 où le système de visualisation 70 n'est plus solidaire du support 40 mais est monté de manière indépendante avec son dispositif motorisé 78. Concrètement, il repose directement sur l'embase 38 du châssis 32 de la machine 30.

Par ailleurs, le dispositif motorisé 28 pour déplacer le plateau 25 est conçu d'une manière différente de celle illustrée à la figure 4. Plus précisément, deux côtés opposés du plateau 25 sont fixés à deux premiers blocs de guidage 80 respectivement traversés et entraînés par deux premières vis sans fin 82 qui s'étendent parallèlement l'une à l'autre. Les deux extrémités de chaque vis sans fin 82 sont supportées en rotation par un longeron 84. Les deux extrémités de chaque longeron 84 sont respectivement solidaires de deux seconds blocs de guidage 86 respectivement traversés et entraînées par deux secondes vis sans fin 88 qui s'étendent parallèlement l'une à l'autre et perpendiculairement aux premières vis sans fin 82. Les deux extrémités de chaque vis sans fin 88 sont supportées en rotation par un longeron 90 solidaire de l'embase 38 du châssis 32 de la machine 30.

Autrement dit, le plateau 25 est monté sur un cadre formé par les deux longerons 84 et mobile suivant l'axe X, et ce cadre est lui-même monté mobile suivant l'axe Y sur un cadre formé par les deux longerons 90 et qui est fixe et solidaire du châssis de la machine 30.

Dans le cas de substrats en silicium, on prévoit avantageusement des substrats avec un poli double face de façon à voir par transparence au moyen d'une caméra dans l'infrarouge proche et avec un éclairage adapté.

La machine selon l'invention qui comprend un grande nombre de dispositifs de microprojection permet une fabrication en masse de biopuces, une telle fabrication pouvant être effectuée en une seule passe. En effet, tous les types de sondes utilisées pouvant être stockées séparément dans les différents réservoirs, on évite tout problème de contamination qui pourrait résulter d'un changement de réservoirs si le nombre de biopuces à fabriquer était supérieur à celui des dispositifs de microprojection disponibles sur la machine.

Il peut s'avérer avantageux de mettre en oeuvre l'invention conjointement avec notamment :
- une utilisation de substrats fonctionnalisés permettant d'obtenir des biopuces stables chimiquement, ces substrats pouvant être obtenus par des procédés de silanisation de supports solides par monocouches auto-assemblées, tels que décrits dans la demande de brevet français FR-0000697 ; et
- une structure de puces compatible d'une part, avec les techniques de détection des hybridations d'acides nucléiques, en particulier avec les méthodes de marquage par des groupements radioactifs au fluorescents, notamment le groupement intercalateur décrit dans la demande de brevet français FR-99 11799, et, d'autre part, avec une méthode de détection d'hybridation décrite dans la demande de brevet français FR-97 07530, et qui permet notamment d'éliminer la phase de marquage par des molécules fluorescentes.

Le procédé de fabrication repose sur un système de microprojection qui est adapté à une production de masse de biopuces, dont l'intérêt est double :
- sur le plan technique : le miniaturisation et la simplicité du système sont telles qu'il est envisageable de mettre en batterie un millier de dispositifs de microprojection alimentés, contrôlés et calibrés de manière totalement indépendante, et
- sur le plan économique : le prix unitaire d'un dispositif de microprojection complet (réservoir, actionneur, tubes, raccords et électronique de commande) est de l'ordre de 150,00 Euros, ce qui rend accessible le coût des machines pour la mise en oeuvre du procédé.

## Revendications

1. Machine pour la fabrication ex situ de biopuces, cette machine comprenant :
- au moins un dispositif de microprojection (D) sur au moins un substrat (18) d'un microvolume de réactif contenant au moins une sonde diluée dans un solvant approprié pour former, après élimination du solvant, au moins un plot (20) comprenant ladite sonde accrochée au substrat (18),
- une batterie de dispositifs de microprojection indépendants (D) pour fabriquer une pluralité de biopuces, en particulier sur des substrats plans,
- au moins une source (5) de gaz sous pression,
- un plateau de support (25) d'au moins un substrat (18), et des moyens pour assurer un déplacement relatif entre le plateau (25) et la batterie de dispositifs de microprojection (D),
**caractérisée en ce qu'**elle comprend également un système de visualisation (70) de contrôle de la projection des plots (20) sur le substrat (18), une mémoire d'enregistrement des écarts entre les positions repérées et les positions souhaitées des plots (20), et un moyen de correction automatique du déplacement relatif entre le plateau (25) et la batterie de dispositifs de microprojection (D) pour compenser lesdits écarts et obtenir un réseau régulier de plots (20).

2. Machine selon la revendication 1, **caractérisée en ce que** chaque dispositif de microprojection (D) comprend :
- un réservoir (1) dans lequel est stocké le réactif (3) à projeter,
- au moins une source (5) de gaz sous pression mis en communication avec le réservoir (1) par un tube d'entrée (7),
- un actionneur (10) relié au réservoir (1) par un tube de sortie (12) dont une extrémité plonge dans le réservoir (1), et
- une buse d'éjection (14) montée en sortie de l'actionneur (10) et qui communique directement avec le réservoir (1) lorsque l'actionneur (10) est dans un état dit ouvert sous le contrôle d'un circuit de commande (22a) constituée par une électrovanne (22).

3. Machine selon la revendication 2, **caractérisée en ce que** tous les réservoirs (1) de la batterie de dispositifs de microprojection (D) sont simultanément mis en communication avec une même source (5) de gaz sous pression.

4. Machine selon la revendication 2 ou 3, **caractérisée en ce que** la batterie de dispositifs de microprojection (D) est configurée suivant une matrice à plusieurs lignes.

5. Machine selon l'une quelconque des revendications 2 à 4, **caractérisée en ce que** la buse d'éjection d'un dispositif de microprojection (D) est constituée par un tube en PTFE.

6. Machine selon l'une quelconque des revendications 2 à 4, **caractérisée en ce que** la buse d'éjection (14) d'un dispositif de microprojection (D) est constituée par une pièce (60) percée d'un diamètre de l'ordre de 10 µm à 100 µm, qui est raccordée à la sortie de l'actionneur (10) par un tube de connexion (62).

7. Machine selon la revendication 6, **caractérisée en ce que** ladite pièce (60) est constituée par un substrat en saphir, en rubis ou en silicium, une pièce en céramique ou en acier inoxydable, par exemple.

8. Machine selon l'une quelconque des revendications 4 à 7, **caractérisée en ce que** chaque ligne de la batterie de dispositifs de microprojection (D) forme un module (35) dont l'ossature comprend au moins :
- un premier bloc-support (37) sous la forme d'un barreau pour supporter l'ensemble des réservoirs (1) du module (35) et assurer les connexions fluidiques nécessaires pour mettre sous pression le réactif (3) stocké dans les réservoirs (1), et
- un second bloc-support (39) pour supporter les actionneurs (10) et les buses d'éjection (14) des dispositifs de microprojection (D) du module (35).

9. Machine selon la revendication 8, **caractérisée en ce que** le premier bloc-support (37) est percé de part en part par un canal longitudinal principal (55) dont une extrémité est reliée à une source (5) de gaz sous pression, et est également percé d'un ensemble de canaux transversaux secondaires (57) qui débouchent dans le canal principal (55) et dans l'ensemble des réservoirs (1) à raison d'un canal secondaire (57) par réservoir (1), de manière à n'utiliser qu'une source (5) de gaz sous pression pour l'ensemble des réservoirs (1) du module (35).

10. Machine selon la revendication 9, **caractérisée en ce que** le premier bloc-support (37) est également percé de part en part d'orifices transversaux (50) au travers desquels passent des tubes de sortie (12) reliant les réservoirs (1) et les actionneurs (10), et **en ce que** ces orifices (50) sont disposés en quinconce.

11. Machine selon la revendication 10, **caractérisée en ce que** chaque tube de sortie (12) est formé de deux tronçons qui se raccordent au niveau d'un orifice transversal (50) du premier bloc-support (37) au moyen d'un raccord rapide (52).

12. Machine selon l'une quelconque des revendications 8 à 11, **caractérisée en ce que** les deux bloc-supports (37,39) sont raccordés l'un à l'autre par des moyens de fixation (48).

13. Machine selon l'une quelconque des revendications 8 à 12, **caractérisée en ce que** l'ossature (37,39) de chaque module (35) est montée de façon amovible sur le bâti (32) de la machine.

14. Machine selon l'une quelconque des revendications 1 à 13, **caractérisée en ce que** la batterie de dispositifs de microprojection est fixe, et **en ce que** le plateau (25) est mobile et commandé par un dispositif motorisé (28) à mouvements croisés en XY au moyen de deux moteurs (M).

15. Machine selon l'une quelconque des revendications 1 à 14, **caractérisée en ce que** le système de visualisation (70) est placé sous le plateau (25) porte-substrat.

16. Machine selon la revendication 15, **caractérisée en ce que** le système de visualisation (70) est monté sur un dispositif motorisé (78) à mouvements croisés en XY.

17. Machine selon la revendication 16, **caractérisée en ce que** le dispositif motorisé (78) à mouvements croisés en XY est monté à l'intérieur du support creux (40) du plateau (25) porte-substrat.

18. Machine selon la revendication 16, **caractérisée en ce que** le dispositif motorisé (78) à mouvements croisés pour assurer le déplacement du plateau (25) porte-substrat, et celui pour assurer le déplacement du système de visualisation (70) sont montés indépendamment l'un de l'autre.

19. Machine selon la revendication 18, **caractérisée en ce que** le plateau (25) porte-substrat est monté sur un premier cadre (84) mobile suivant l'axe (X), et **en ce que** ce premier cadre (84) est monté mobile suivant l'axe (Y) sur un second cadre fixe (90).

20. Machine selon l'une quelconque des revendications 1 à 19, **caractérisée en ce que** le système de visualisation (70) comprend une caméra (72), un miroir (74) à 45°, un zoom (76) et un dispositif d'éclairage.

21. Machine selon l'une quelconque des revendications 2 à 20, dans laquelle chaque ligne de la batterie de dispositifs de microprojection (D) forme un module (35) dont l'ossature comprend au moins :
■ un premier bloc-support (37) sous la forme d'un barreau pour supporter l'ensemble des réservoirs (1) du module (35) et assurer les connexions fluidiques nécessaires pour mettre sous pression le réactif (3) stocké dans les réservoirs (1), et
■ un second bloc-support (39) pour supporter les actionneurs (10) et les buses d'éjection (14) des dispositifs de microprojection (D) du module (35), un degrés de liberté en rotation étant prévu sur chaque buse d'éjection.

22. Procédé pour la fabrication ex situ de biopuces, du type consistant à projeter sous pression sur au moins un substrat (18) porté par un plateau mobile (25) un microvolume d'un réactif contenant au moins une sonde diluée dans un solvant approprié pour former, après élimination du solvant, au moins un plot (20) comprenant ladite sonde accrochée au substrat (18), consistant à utiliser une batterie de dispositifs de microprojection indépendants (D) pour projeter des microgouttes de réactifs suivant un mode séquentiel d'un volume de l'ordre de 10 nl sur des substrats plans d'un nombre de l'ordre de 1 à 10 000 pour obtenir des plots (20) d'un diamètre de l'ordre de 100 à 1 000 µm avec un écart entre plots de l'ordre de 50 à 500 µm, **caractérisé en ce qu'**il consiste, avant la fabrication des puces, à effectuer une opération de calibration pour obtenir un réseau régulier de plots (20) sur le substrat (18), cette opération consistant :
- à projeter des plots (20) sur un substrat intermédiaire transparent,
- à repérer la position des plots (20) formés sur le substrat (18) au moyen d'un système de visualisation (70),
- à enregistrer en mémoire les écarts entre les positions repérées et les positions souhaitées des plots (20),
puis, lors de la fabrication des puces,
- à corriger automatiquement, le déplacement relatif entre le plateau (25) et la batterie de dispositifs de microprojection (D) pour compenser lesdits écarts et obtenir un réseau régulier de plots (20).

23. Procédé selon la revendication 22, **caractérisé en ce qu'**il consiste à équiper chaque dispositif de microprojection (D) avec un réservoir (1) contenant un réactif et une buse d'éjection (14), à maintenir sous pression le réservoir (1) à partir d'une source (5) de gaz sous pression, et à mettre simultanément sous pression tous les réservoirs (1) de la batterie de dispositifs de microprojection (D) à partir d'une seule source (5) de gaz sous pression.

24. Procédé selon la revendication 23, **caractérisé en ce qu'**il consiste à compléter chaque dispositif de microprojection (D) avec un actionneur (10) interposé entre le réservoir (1) et la buse d'éjection (14), et à commander l'actionneur (10) dans un état dit ouvert pendant un temps déterminé pour mettre en communication directe le réservoir (1) et la buse d'éjection (14), de manière à projeter le microvolume de réactif sous l'action de la pression du gaz présent dans le réservoir (1).

25. Procédé selon la revendication 24, **caractérisé en ce qu'**il consiste à faire varier le microvolume de réactif projeté en jouant sur la pression du gaz et/ou le temps d'ouverture de l'actionneur (10).

26. Procédé selon la revendication 24 ou 25, **caractérisé en ce qu'**il consiste à utiliser une microélectrovanne (22) comme actionneur et dont le temps d'ouverture est contrôlé par un dispositif de commande électronique (22a).

27. Procédé selon l'une quelconque des revendications 22, à 26, **caractérisé en ce qu'**il consiste à associer un type de sonde à un dispositif de microprojection (D).

28. Procédé selon l'une quelconque des revendications 22 à 27, **caractérisé en ce qu'**il consiste à former en une seule passe plusieurs plots (20) sur au moins un substrat (18) sans changer les réservoirs (1) contenant les sondes.

29. Procédé selon l'une quelconque des revendications 22 à 28, **caractérisé en ce qu'**il consiste à effectuer un contrôle qualité pour vérifier si un plot (20) a bien été formé sur le substrat (18), ce contrôle qualité consistant à utiliser un système de visualisation (70) monté sous le plateau (25) porte-substrat de façon à visualiser la formation des plots (20).

30. Procédé selon la revendication 29, **caractérisé en ce qu'**il consiste à faire déplacer le plateau (25) et le système de visualisation (70) de manière indépendante l'un de l'autre.

31. Procédé selon l'une quelconque des revendications 22 à 30, **caractérisé en ce que**, après la fabrication des puces, on effectue une procédure de décontamination qui consiste à remplacer les réservoirs de réactifs par des réservoirs contenant un solvant de nettoyage, de l'eau par exemple, et à actionner les dispositifs de micropojection (D) avec un fort débit pour nettoyer l'ensemble de dispositifs de microprojection (D).

32. Procédé selon l'une quelconque des revendications 22 à 31, consistant en outre à utiliser une batterie de dispositifs de microprojection indépendants (D) comprenant un actionneur (10) pour projeter des microgouttes de réactifs suivant un mode tir à la volée, en déplacement selon deux axes (XY), dans lequel, avant la fabrication des puces, une opération de calibration est effectuée pour obtenir un réseau régulier de plots (20) sur le substrat (18), cette opération consistant :
- à projeter des plots (20) sur un substrat intermédiaire transparent,
- à repérer la position des plots (20) formés sur le substrat (18) au moyen d'un système de visualisation (70),
- à corriger l'imprécision de chaque tir suivant le premier axe (X), en alignant les actionneurs (10) un à un par un réglage mécanique,
- à procéder à une calibration suivant le second axe (Y), puis, lors de la fabrication des puces,
- à faire fonctionner la machine avec un tir à la volée suivant le second axe (Y), et
- à déplacer le plateau (25) en mode pas à pas suivant le premier axe (X).

33. Procédé selon l'une quelconque des revendications 24 à 32, consistant en outre :
- avant la fabrication des puces, à effectuer une opération de calibration pour obtenir un réseau régulier de plots (20) sur le substrat (18), cette opération consistant à peser le microvolume projeté par chaque actionneur (10), et
- lors de la fabrication des puces, à faire varier le débit des dispositifs de microprojection en jouant sur la pression du gaz et/ou la durée d'ouverture de l'actionneur (10) de façon à calibrer le microvolume de réactif projeté par chaque dispositifs de microprojection.

34. Procédé selon la revendication 33, dans lequel l'opération de calibrage consiste à classer par module les actionneurs (10) ayant des volumes de projection proches et à compenser les écarts entre les modules en ajustant la pression du gaz sur chaque module.

35. Procédé selon la revendication 33, dans lequel les actionneurs sont des microélectrovannes (22) et dans lequel l'opération de calibrage consiste à faire varier la durée d'ouverture des actionneurs (10) de façon à compenser les dispersions des microvolumes projetés.

## Claims

1. A machine for ex situ fabrication of biochips, the machine comprising
at least one microprojection device (D) for projecting onto at least one substrate (18) a microvolume of reagent containing at least one probe diluted in an appropriate solvent so as to form, after elimination of the solvent, at least one spot (20) comprising said probe attached to the substrate (18),
a battery of independent microprojection devices (D) for fabricating a plurality of biochips, in particular on plane substrates,
at least one source (5) of gas under pressure,
a support plate (25) supporting at least one substrate (18), and means for imparting relative displacement between the plate (25) and the battery of microprojection devices (D), **characterized in that** further comprising a display system (70) for monitoring the projection of spots (20) on the substrate, a memory for recording the differences between the identified positions and the desired positions of the spots (20), and a means for automatically correcting the relative displacement between the plate (25) and the battery of microprojection devices (D) to compensate for said differences and obtain a regular array of spots (20).

2. A machine according to claim 1, wherein each microprojection device (D) comprises:
a tank (1) in which the reagent for projection is stored;
at least one source (5) of gas under pressure put into communication with the tank (1) via an inlet tube (7) ;
an actuator (10) connected to the tank (1) via an outlet tube (12) having one end dipping into the tank (1); and
an ejection nozzle (14) mounted at the outlet of the actuator (10) and communicating directly with the tank (1) when the actuator (10) is an "open" state under the control of a control circuit (22a) constituted by a solenoid valve (22).

3. A machine according to claim 2, wherein all of the tanks (1) of the battery of microprojection devices (D) are put simultaneously into communication with a common source (5) of gas under pressure.

4. A machine according to claim 2 or 3, wherein the battery of microprojection devices (D) is configured in a matrix having a plurality of rows.

5. A machine according to any one of claims 2 to 4, wherein the ejection nozzle of a microprojection device (D) is constituted by a tube of PTFE.

6. A machine according to any one of claims 2 to 4, wherein the ejection nozzle (14) of a microprojection device (D) is constituted by a part (60) pierced by a hole having a diameter of about 10 µm to 100 µm, and connected to the outlet of the actuator (10) via a connection tube (62).

7. A machine according to claim 6, wherein said part (60) is constituted by a substrate made of sapphire, ruby, or silicon, a part made of ceramic or of stainless steel, for example.

8. A machine according to any one of claims 4 to 7, wherein each row of the battery of microprojection devices (D) forms a module (35) of structure comprising at least:
a first support block (37) in the form of a bar for supporting the set of tanks (1) of the module (35) and and for providing the fluid flow connections needed for putting the reagent (3) stored in the tank (1) under pressure; and
• a second support block (39) for supporting the actuators (10) and the ejection nozzles (14) of the microprojection devices (D) of the module (35).

9. A machine according to claim 8, wherein the first support block (37) is pierced by a main longitudinal through (55) channel having one end connected to a source (5) of gas under pressure, and is also pierced by a set of secondary (57) transverse (55) channels each opening out into the main channel and into the set of tanks (1), there being one secondary (57) channel per tank (1), thereby enabling a single source (5) of gas under pressure to be used for all of the tanks (1) of the module (35).

10. A machine according to claim 9, wherein the first support block (37) is also pierced by transverse through orifices (50) through which outlet tubes (12) pass connecting the tanks (1) to the actuators (10), and wherein said orifices (50) are disposed in a staggered configuration.

11. A machine according to claim 10, wherein each outlet tube (12) is formed by two segments which are connected together at a transverse orifice (50) of the first support (37) block by means of a quick coupling (52).

12. A machine according to any one of claims 8 to 11, wherein the two support blocks (37, 39) are connected to each other by fixing means (48).

13. A machine according to any one of claims 8 to 12, wherein the structure (37, 39) of each module (35) is removably mounted on the structure (32) of the machine.

14. A machine according to any one of claims 1 to 13, wherein the battery of microprojection devices is stationary, and wherein the plate (25) is a moving plate controlled by a motor-driven device (28) delivering crossed XY movements by means of two motors (M).

15. A machine according to any one of claims 1 to 14, wherein the display system (70) is placed beneath the substrate-carrying plate (25).

16. A machine according to claim 15, wherein the display system (70) is mounted on a motor-driven device (78) imparting crossed XY movements.

17. A machine according to claim 16, wherein the motor-driven device (78) imparting crossed XY movements is mounted inside a hollow support (40) for the substrate-carrying plate (25).

18. A machine according to claim 16, wherein the motor-driven device (78) for imparting crossed movements or moving the substrate-carrying (25) plate and the device for moving the display system (70) are mounted independently of each other.

19. A machine according to claim 18, wherein the substrate-carrying plate (25) is mounted on a first frame (84) movable along the X axis, and wherein said first frame (84) is mounted to move along the Y axis by a second frame (90) which is stationary.

20. A machine according to any one of claims 1 to 19, wherein the display system (70) comprises a camera (72), a 45° mirror (74), a zoom lens (76), and a lighting device.

21. A machine according to any one of claims 2 to 20, wherein each row of the battery of microprojection devices (D) forms a module (35) of structure comprising at least:
a first support block (37) in the form of a bar for supporting the set of tanks (1) of the module (35) and for providing the fluid flow connections needed for putting the reagent (3) stored in the tank (1) under pressure; and
a second support block (39) for supporting the actuators (10) and the ejection nozzles (14) of the microprojection devices (D) of the module (35), a degree of freedom in rotation being provided for each ejection nozzle.

22. A method for ex situ fabrication of biochips, the method being of the type that consists in projecting onto at least one substrate (18)carried by a moving plate (25), a microvolume of a reagent containing at least one probe diluted in a suitable solvent so as to form, after elimination of the solvent, at least one spot (20) comprising said probe attached to the substrate (18), the method consists in using a battery of independent microprojection devices (D) for projecting microdroplets of reagents in a sequential mode or in an on-the-fly firing mode, in projecting microdroplets at a volume of about 10 nl onto plane substrates, the number of microdroplets lying in the range 1 to 10,000, so as to obtain spots (20) having a diameter of about 100 µm to 1000 µm with inter-spot spacing of about 50 µm to 500 µm, characterize in that the method consisting, prior to fabricating chips, in performing a calibration operation so as to obtain a regular array of spots (20) on the substrate (18), said operation consisting in:
projecting spots (20) onto a transparent intermediate substrate;
identifying the positions of the spots (20) formed on the substrate (18) by means of a display system (70);
recording in a memory the differences between the identified positions and the desired positions of the spots (20); and then, when fabricating chips,
automatically correcting relative displacement between the plate (25) and the battery of microprojection devices (D) to compensate for said differences and obtain a regular array of spots (20).

23. A method according to claim 22, consisting in fitting each microprojection device (D) with a tank (1) containing a reagent and an ejection nozzle (14), in maintaining the tank (1) under pressure from a source (5) of gas under pressure, and in simultaneously putting all of the tanks (1) of the battery of microprojection devices (D) under pressure simultaneously from a single source (5) of gas under pressure.

24. A method according to claim 23, consisting in associating each microprojection device (D) with an actuator (10) interposed between the tank (1) and the ejection nozzle (14), and in controlling the actuator (10) to occupy an "open" state during a determined length of time so as to put the tank (1) directly into communication with the ejection nozzle (14), thereby enabling the microvolume of reagent to be projected under drive from the pressure of the gas present in the tank (1).

25. A method according to claim 24, consisting in varying the microvolume of projected reagents by acting on the pressure of the gas and/or the length of time the actuator (10) is open.

26. A method according to claim 24 or 25, consisting in using a micro solenoid valve (22) as the actuator and in controlling the length of time it is open by means of an electronic control device (22a).

27. A method according to any one of claim 22 to 26, consisting in associating each microprojection device (D) with a single type of probe.

28. A method according to any one of claims 22 to 27, consisting in forming a plurality of spots (20) on at least one substrate (18) in a single pass without changing the tanks (1) containing the probes.

29. A method according to any one of claims 22 to 28, consisting in performing quality control to verify whether a spot (20) has indeed been formed on the substrate (18), said quality control consisting in using a display system (70) mounted beneath the substrate-carrying plate (25) so as to view the formation of spots (20).

30. A method according to claim 29, consisting in causing the plate (25) and the display system (70) to be displaced independently of each other.

31. A method according to any one of claims 22 to 30, wherein, after fabricating chips, a decontamination procedure is performed which consists in replacing the reagent tanks with tanks containing a cleaning solvent, e.g. water, and in actuating the microprojection devices (D) at a high flow rate in order to clean all of the microprojection devices (D).

32. A method according to any one of claims 22 to 31, further consisting in using a battery of independent microprojection devices (D) comprising an actuator (10) for projecting microdroplets of reagents in an on-the-fly firing mode according to the two axis XY displacement, wherein prior to fabricating chips, a calibration operation is performed so as to obtain a regular array of spots (20) on the substrate (18), said operation consisting in
projecting spots (20) onto a transparent intermediate substrate;
identifying the positions of the spots (20) formed on the substrate (18) by means of a display system (70);
correcting the inaccuracy of each shot along the first (X) axis,by aligning the actuators (10) one by one by mechanical adjustment;
proceeding with calibration along the second (Y) axis;then, when fabricating chips
operating the machine with firing on-the-fly along the second (Y) axis; and
moving the plate (25) in step-by-step mode along the first (X) axis.

33. A method according to any one of claims 24 to 32, further consisting in:
prior to fabricating chips, in performing a calibration operation so as to obtain a regular array of spots (20) on the substrate (18), said operation consisting in weighing projected microvolume by each actuator (10), and
when fabricating chips, to vary the flow rates of the microprojection devices by acting on the gas pressure and/or the length of time the actuators (10) are open, such as calibrating the microvolume of reagent that is projected by each microprojection device.

34. A method according to claim 33, wherein calibration operation consists in classifying by modules the actuators (10) having similar projection volumes, and then compensating for differences between modules by adjusting gas pressure in each module.

35. A method according to claim 33, wherein the actuators are micro solenoid valves (22) and wherein calibration operation consists in varying the length of time the actuators (10) are open in such a manner as to compensate for the dispersions in the projected microvolumes.

## Patentansprüche

1. Maschine zur Ex-situ-Herstellung von Biochips, wobei die Maschine aufweist:
- zumindest eine Vorrichtung (D) zur Mikroprojektion auf zumindest ein Substrat (18) eines Mikrovolumens einer Reagens, die zumindest eine Sonde aufweist, die in einem angemessenen Lösungsmittel gelöst ist, um nach der Entfernung des Lösungsmittels zumindest einen Kontakt (20) zu bilden, der die Sonde aufweist, die an dem Substrat (18) befestigt ist,
- eine Gruppe von unabhängigen Vorrichtungen (D) zur Mikroprojektion zur Herstellung einer Vielzahl von Biochips, insbesondere auf ebenen Substraten,
- zumindest eine Quelle (5) von Gas unter Druck,
- eine Stützplatte (25) von zumindest einem Substrat (18) und eine Einrichtung zum Absichern der Relativverschiebung zwischen der Platte (25) und der Gruppe von Vorrichtungen (D) zur Mikroprojektion,
**dadurch gekennzeichnet, dass** diese ebenfalls aufweist: ein System (70) zur Visualisierung der Steuerung des Spritzens der Kontakte (20) auf das Substrat (18), einen Speicher zum Abspeichern von Abständen zwischen den lokalisierten Positionen und den gewünschten Positionen der Kontakte (20) und eine Einrichtung zur automatischen Korrektur der Verschiebung zwischen der Platte (25) und der Gruppe von Vorrichtungen (D) zur Mikroprojektion zum Ausgleichen der Abstände und Erhalten eines regelmäßigen Gitters von Kontakten (20).

2. Maschine nach Anspruch 1, **dadurch gekennzeichnet, dass** jede Vorrichtung (D) zur Mikroprojektion aufweist:
- einen Behälter (1), in dem die zu spritzende Reagenz (3) gespeichert ist,
- zumindest eine Quelle (5) von Gas unter Druck, die mit dem Behälter (1) durch ein Einlassrohr (7) in Verbindung gebracht ist,
- eine Betätigungseinrichtung (10), die mit dem Behälter (1) durch ein Auslassrohr (12) verbunden ist, dessen einer Endabschnitt in den Behälter (1) getaucht ist, und
- eine Ausstoßdüse (14), die am Austritt der Betätigungseinrichtung (10) montiert ist und die direkt mit dem Behälter (1) in Verbindung steht, wenn sich die Betätigungseinrichtung (10) in einem offenen Zustand befindet, unter der Steuerung einer Steuerschaltung (22a), die durch ein Magnetventil (22) gebildet wird.

3. Maschine nach Anspruch 2, **dadurch gekennzeichnet, dass** alle Behälter (1) der Gruppe von Vorrichtungen (D) zur Mikroprojektion gleichzeitig mit der gleichen Quelle (5) von Gas unter Druck in Verbindung gebracht sind.

4. Maschine nach Anspruch 2 oder 3, **dadurch gekennzeichnet, dass** die Gruppe von Vorrichtungen (D) zur Mikroprojektion entsprechend einer Matrix mit mehreren Zeilen konfiguriert ist.

5. Maschine nach einem der Ansprüche 2 bis 4, **dadurch gekennzeichnet, dass** die Ausstoßdüse einer Vorrichtung (D) zur Mikroprojektion durch ein Rohr aus PTFE gebildet ist.

6. Maschine nach einem der Ansprüche 2 bis 4, **dadurch gekennzeichnet, dass** die Ausstoßdüse (14) einer Vorrichtung (D) zur Mikroprojektion durch ein Stück (60) gebildet ist, das mit einem Durchmesser in der Größenordnung von 10 µm bis 100 µm gelocht ist, dem am Austritt der Betätigungseinrichtung (10) ein Verbindungsrohr (62) zugeordnet ist.

7. Maschine nach Anspruch 6, **dadurch gekennzeichnet, dass** das Stück (60) durch ein Substrat beispielsweise aus Saphir, aus Rubin oder aus Silizium, ein Stück aus Keramik oder aus rostfreiem Stahl gebildet ist.

8. Maschine nach einem der Ansprüche 4 bis 7, **dadurch gekennzeichnet, dass** jede Zeile der Gruppe von Vorrichtungen (D) zur Mikroprojektion ein Modul (35) bildet, dessen Rahmen zumindest aufweist:
- einen ersten Stützblock (37) in Form eine Stabes, um die Gruppe von Behältern
(1) des Moduls (35) zu stützen und die Fluidverbindungen abzusichern, die notwendig sind, um die in den Behältern (1) gespeicherte Reagenz (3) unter Druck zu setzen, und
- einen zweiten Stützblock (39) zum Stützen der Betätigungseinrichtungen (10) und der Ausstoßdüsen (14) der Vorrichtungen (D) zur Mikroprojektion des Moduls (35).

9. Maschine nach Anspruch 8, **dadurch gekennzeichnet, dass** der erste Stützblock (37) durch und durch von einen Hauptlängskanal (55) durchdrungen ist, von dem ein Endabschnitt mit einer Quelle (5) für Gas unter Druck verbunden ist, und von einer Gruppe von sekundären Querkanälen (57) ebenfalls durchdrungen ist, die in den Hauptkanal (55) und in die Gruppe von Behältern (1) aufgrund eines Sekundärkanals (57) je Behälter (1) münden, in einer Weise, dass nur eine Quelle (5) von Gas unter Druck für die Gruppe von Behältern (1) des Moduls (35) verwendet wird.

10. Maschine nach Anspruch 9, **dadurch gekennzeichnet, dass** der erste Stützblock (37) ebenfalls durch und durch von Queröffnungen (50) durchdrungen ist, quer zu welchen Austrittsrohre (12) verlaufen, die die Behälter (1) und die Betätigungseinrichtungen (10) verbinden, und dass die Öffnungen (50) gegeneinander versetzt angeordnet sind.

11. Maschine nach Anspruch 10, **dadurch gekennzeichnet, dass** jedes Auslassrohr (12) von zwei Teilstücken gebildet ist, die sich auf der Höhe einer Queröffnung (50) des ersten Stützblocks (37) mittels einer Schnellverbindung (52) anschließen.

12. Maschine nach einem der Ansprüche 8 bis 11, **dadurch gekennzeichnet, dass** die zwei Stützblöcke (37, 39) mittels einer Befestigungseinrichtung (48) aneinander angeschlossen sind.

13. Maschine nach einem der Ansprüche 8 bis 12, **dadurch gekennzeichnet, dass** der Rahmen (37, 39) von jedem Modul (35) am Gestell (32) der Maschine in einer lösbaren Weise montiert ist.

14. Maschine nach einem der Ansprüche 1 bis 13, **dadurch gekennzeichnet, dass** die Gruppe von Vorrichtungen zur Mikroprojektion unbeweglich ist und dass die Platte (25) beweglich ist und durch eine motorisierte Vorrichtung (28) zu kreuzförmigen XY-Bewegungen mittels zwei Motoren (M) angesteuert ist.

15. Maschine nach einem der Ansprüche 1 bis 14, **dadurch gekennzeichnet, dass** das Visualisierungssystem (70) unter der das Substrat stützenden Platte (25) angeordnet ist.

16. Maschine nach Anspruch 15, **dadurch gekennzeichnet, dass** das Visualisierungssystem (70) an der motorisierten Vorrichtung (78) zur kreuzweisen XY-Bewegung montiert ist.

17. Maschine nach Anspruch 16, **dadurch gekennzeichnet, dass** die motorisierte Vorrichtung (78) zur kreuzweisen XY-Bewegung im Inneren der hohlen Stütze (40) der das Substrat stützenden Platte (25) montiert ist.

18. Maschine nach Anspruch 16, **dadurch gekennzeichnet, dass** die motorisierte Vorrichtung (78) zur kreuzweisen Bewegung zum Absichern der Verschiebung der Vorrichtung der das Substrat tragenden Platte (25) und die zum Absichern der Verschiebung des Visualisierungssystems (70) voneinander unabhängig montiert sind.

19. Maschine nach Anspruch 18, **dadurch gekennzeichnet, dass** die das Substrat tragende Platte (25) an einem ersten Rahmen (84) beweglich entlang der Achse (X) montiert ist und dass der erste Rahmen (84) beweglich entlang der Achse (Y) an einem zweiten festen Rahmen (90) montiert ist.

20. Maschine nach einem der Ansprüche 1 bis 19, **dadurch gekennzeichnet, dass** das Visualisierungssystem (70) eine Kamera (72), einen Spiegel (74) mit 45°, einen Zoom (76) und eine Beleuchtungsvorrichtung aufweist.

21. Maschine nach einem der Ansprüche 2 bis 20, bei der jede Zeile der Gruppe von Vorrichtungen (D) zur Mikroprojektion ein Modul (35) bildet, dessen Rahmen zumindest aufweist:
einen ersten Stützblock (37) in Form eines Stabes zum Stützen der Gruppe von Behältern (1) des Moduls (35) und zum Absichern der Fluidverbindungen, die notwendig sind, um die in den Behältern (1) gespeicherte Reagens (3) unter Druck zu setzen, und
einen zweiten Stützblock (39) zum Stützen von Betätigungseinrichtung (10) und der Ausstoßdüsen (14) der Vorrichtungen (D) zur Mikroprojektion des Moduls (35), wobei ein Rotationsfreiheitsgrad an jeder Ausstoßdüse vorgesehen ist.

22. Verfahren zur Ex-situ-Herstellung von Biochips von dem Typ, der aufweist:
Spritzen unter Druck auf zumindest ein Substrat (18), das durch eine bewegliche Platte (25) getragen wird, von einem Mikrovolumen einer Reagens, die zumindest eine Sonde aufweist, die in einem angemessen Lösungsmittel gelöst ist, um nach der Beseitigung des Lösungsmittels zumindest einen Kontakt (20) zu bilden, der die Sonde, die an dem Substrat (18) befestigt ist, aufweist,
Verwenden einer Gruppe von unabhängigen Vorrichtungen (D) zur Mikroprojektion zum Spritzen von Mikrotropfen von Reagenzien entsprechend einem aufeinanderfolgenden Modus eines Volumens in der Größenordnung von 10nl auf ebene Substrate mit einer Anzahl in der Größenordnung von 1 bis 10 000 zum Erhalten von Kontakten (20) mit einem Durchmesser in der Größenordnung von 100 bis 1000 µm mit einem Abstand zwischen den Kontakten in der Größenordnung von 50 bis 500 µm, **dadurch gekennzeichnet, dass** dieses vor der Herstellung der Chips das Ausführen eines Vorgangs der Kalibrierung zum Erhalten eines regelmäßigen Gitters von Kontakten (20) auf dem Substrat (18) aufweist, wobei der Vorgang aufweist;
- Spritzen der Kontakte (20) auf ein transparentes Zwischensubstrat,
- Lokalisieren der Position der Kontakte (20), die auf dem Substrat (18) ausgebildet sind, mittels eines Visualisierungssystem (70),
- Speichern der Abstände zwischen den lokalisierten Positionen und den gewünschten Positionen der Kontakte (20) im Speicher,
und dann bei der Herstellung der Chips
automatisches Korrigieren der Relativverschiebung zwischen der Platte (25) und der Gruppe von Vorrichtungen (D) zur Mikroprojektion zum Ausgleichen der Abstände und zum Erhalten eines regelmäßigen Gitters von Kontakten (20).

23. Verfahren nach Anspruch 22, **dadurch gekennzeichnet, dass** dieses aufweist: Versehen von jeder Vorrichtung (D) zur Mikroprojektion mit einem Behälter (1), der eine Reagens aufweist, und mit einer Ausstoßdüse (14), Halten des Behälters (1) unter Druck von einer Quelle (5) von Gas unter Druck ausgehend, und gleichzeitiges UnterDruck-Setzen aller Behälter (1) der Gruppe von Vorrichtungen (D) zur Mikroprojektion von einer einzigen Quelle (5) von Gas unter Druck ausgehend.

24. Verfahren nach Anspruch 23, **dadurch gekennzeichnet, dass** dieses aufweist: Vervollständigen jeder Vorrichtung (D) zur Mikroprojektion mit einer Betätigungseinrichtung (10), die zwischen den Behälter (1) und die Ausstoßdüse (14) zwischengefügt ist und Steuern der Betätigungseinrichtung (10) in einen sogenannten offenen Zustand während einer Zeit, die bestimmt ist, um den Behälter (1) und die Ausstoßdüse (14) direkt in Verbindung zu bringen, in einer Weise, dass das Mikrovolumen der Reagens unter der Wirkung des Druckes des Gases, das im Behälter (1) vorliegt, gespritzt wird.

25. Verfahren nach Anspruch 24, **dadurch gekennzeichnet, dass** dieses das Variieren-Lassen des Mikrovolumens der gespritzten Reagens aufweist, indem der Druck des Gases und/oder die Öffnungszeit der Betätigungseinrichtung (10) beeinflusst werden.

26. Verfahren nach Anspruch 24 oder 25, **dadurch gekennzeichnet, dass** dieses das Verwenden eines Mikro-Magnetventils (22) als Betätigungseinrichtung, dessen Öffnungszeit durch eine elektronische Steuervorrichtung (22a) gesteuert wird, aufweist.

27. Verfahren nach einem der Ansprüche 22 bis 26, **dadurch gekennzeichnet, dass** dieses das Vereinen von einem Sondentyp mit einer Vorrichtung (D) zur Mikroprojektion aufweist.

28. Verfahren nach einem der Ansprüche 22 bis 27, **dadurch gekennzeichnet, dass** dieses das Ausbilden einer Vielzahl von Kontakten (20) in einem Durchgang auf zumindest einem Substrat (18) ohne ein Ändern der Behälter (1), die die Sonden enthalten, aufweist.

29. Verfahren nach einem der Ansprüche 22 bis 28, **dadurch gekennzeichnet, dass** dieses das Bewirken einer Qualitätskontrolle zum Überprüfen, ob ein Kontakt (20) auf dem Substrat (18) gut ausgebildet wurde, aufweist, wobei diese Qualitätskontrolle das Verwenden eines Visualisierungssystems (70) aufweist, das an der das Substrat tragenden Platte (25) in einer Weise montiert ist, dass die Ausbildung der Kontakte (20) visualisiert wird.

30. Verfahren nach Anspruch 29, **dadurch gekennzeichnet, dass** dieses das Verschieben der Platte (25) und des Visualisierungssystems (70) in einer voneinander unabhängigen Weise aufweist.

31. Verfahren nach einem der Ansprüche 22 bis 30, **dadurch gekennzeichnet, dass** nach der Herstellung der Chips ein Prozess der Dekontamination ausgeführt wird, der aufweist: Ersetzen der Behälter der Reagenzien durch Behälter, die ein Reinigungs-Lösungsmittel aufweisen, beispielsweise mit Wasser, und Betätigen der Vorrichtungen (D) zur Mikroprojektion mit einem starken Durchsatz zum Reinigen der Gruppe von Vorrichtungen (D) zur Mikroprojektion.

32. Verfahren nach einem der Ansprüche 22 bis 31, das ferner aufweist: Verwenden einer Gruppe von unabhängigen Vorrichtungen (D) zur Mikroprojektion mit einer Betätigungseinrichtung (10) zum Spritzen von Mikrotropfen von Reagenzien entsprechend einem Flugschussmodus, indem eine Verschiebung entlang von zwei Achsen (XY) vorgenommen wird, bei dem vor der Herstellung der Chips ein Kalibrierungsvorgangs ausgeführt wird, um ein regelmäßiges Gitter von Kontakten (20) auf dem Substrat (18) zu erhalten, wobei der Vorgang aufweist:
- Spritzen von Kontakten (20) auf ein transparentes Zwischensubstrat,
- Lokalisieren der Positionen von Kontakten (20), die auf dem Substrat (18) ausgebildet sind, mittels eines Visualisierungssystems (70),
- Korrigieren der Ungenauigkeit von jedem Schuss entlang der ersten Achse (X), indem die Betätigungseinrichtungen (10) nacheinander durch eine mechanische Regelung ausgerichtet werden,
- Ausführen einer Kalibrierung entlang der zweiten Achse (Y) dann, während der Herstellung der Chips,
- Laufenlassen der Maschine mit einem Flugschuss entlang der zweiten Achse (Y),
- Verschieben der Platte (25) im Schritt-für-Schritt-Modus entlang der ersten Achse (X).

33. Verfahren nach einem der Ansprüche 24 bis 32, das ferner aufweist:
- vor der Herstellung der Chips das Ausführen eines Kalibrierungsvorgangs zum Erhalten eines regelmäßigen Gitters von Kontakten (20) auf dem Substrat (18), wobei dieser Vorgang das Wiegen des durch jede Betätigungseinrichtung (10) gespritzten Mikrovolumens aufweist, und
- bei der Herstellung von Chips das Variieren-Lassen des Durchsatzes der Vorrichtungen zur Mikroprojektion durch Beeinflussen des Druckes des Gases und/oder der Dauer der Öffnung der Betätigungseinrichtung (10) in einer Weise, dass das durch jede der Vorrichtungen zur Mikroprojektion gespritzte Mikrovolumen der Reagens kalibriert wird.

34. Verfahren nach Anspruch 33, wobei der Kalibrierungsvorgang das Einteilen der Betätigungseinrichtungen (10) mit nahen Spritzvolumen je Modul und das Kompensieren der Abstände zwischen den Modulen durch das Einstellen des Gasdrucks an jedem Modul aufweist.

35. Verfahren nach Anspruch 33, bei dem die Betätigungseinrichtungen Mikromagnetventile (22) sind und bei dem der Kalibrierungsvorgang das Variieren-Lassen der Öffnungsdauer der Betätigungseinrichtungen (10) in einer Weise aufweist, dass die Dispersionen der gespritzten Mikrovolumen ausgeglichen werden.
